# EUROPEAN PATENT SPECIFICATION

(11) **EP 3 136 613 B1**
(45) Date of publication and mention of the grant of the patent: **22.09.2021**
(21) Application number: 15183077.5
(22) Date of filing: 31.08.2015
(51) Int. Cl.: H04B 5/00, H02J 5/00, H02J 7/02, H02J 7/00

(54) **TRANSMISSION OF AN INDUCTIVE-CHARGING SIGNAL**
ÜBERTRAGUNG EINES INDUKTIVLADUNGSSIGNALS
TRANSMISSION D'UN SIGNAL DE CHARGE INDUCTIF

(43) Date of publication of application: 01.03.2017
(73) Proprietor: Nokia Technologies Oy, 02610 Espoo (FI)
(72) Inventor: MUURINEN, Jari, 25500 Perniö (FI)
(74) Representative: Swindell & Pearson Limited

(56) References cited:
- US-A1- 2012 193 993
- US-A1- 2012 306 284
- US-A1- 2014 197 783
- US-A1- 2014 239 732
- None

## Description

### TECHNICAL FIELD

The present application relates generally to transmission of an inductive-charging signal.

### BACKGROUND

In modern times, electronic apparatus are often powered by electrical batteries, electrical cells, and/or the like. Such electronic devices need to have their power sources occasionally recharged. As such, it may be desirable to configure an apparatus such that the apparatus facilitates charging of an electronic apparatus in an easy and efficient manner.

US2014/0197783 discloses an apparatus configured to transmit power, and transceiver data, using mutual resonance, includes a power transmitter configured to wirelessly transmit power to a device, using a power transmission frequency as a resonant frequency. The apparatus further includes a communication unit configured to transceive data to and from the device, using a communication frequency as a resonant frequency. The apparatus further includes a controller configured to determine a charging state of the device based on the data received from the device and control an amount of the power based on the charging state.

US2012/0193993 discloses an inductive power transfer system and method for transferring power to an electrical device wirelessly. The system includes an inductive power outlet and an inductive power receiver. During operation, instruction signals are sent from the inductive power outlet to the inductive power receiver. When no instruction signals are transferred, the system is configured to deactivate such that power is drawn by the system only during operation.

US2012/0306284 discloses a transmitter in a wireless power transmission system, the transmitter including a Transmission (Tx) power converter for converting a Direct Current (DC) voltage into a first Alternating Current (AC) voltage, and converting the converted first AC voltage into a second AC voltage by amplifying the converted first AC voltage, a Tx matching circuit for matching an impedance thereof with that of a receiver for receiving AC voltage to transmit the second AC voltage, a Tx resonator for resonating the second AC voltage into resonant waves to transmit the second AC voltage to the receiver, and a Tx controller for determining an amplification rate of the first AC voltage and controlling the Tx power converter to convert the first AC voltage into the second AC voltage according to the determined amplification rate.

### SUMMARY

The invention is set out in the independent claims whereas preferred embodiments are outlined in the dependent claims.

### BRIEF DESCRIPTION OF THE DRAWINGS

The invention is defined by the appended claims.

For a more complete understanding of one or more example embodiments, reference is now made to the following descriptions taken in connection with the accompanying drawings in which:
FIG. 1 is a block diagram showing an apparatus according to at least one example embodiment;
FIG. 2 is a diagram illustrating a inductive-charging apparatuses according to at least one example embodiment;
FIG. 3 is a diagram illustrating an inductive-charging system according to at least one example embodiment;
FIG. 4 is a diagram illustrating efficiency in an inductive-charging system according to at least one example embodiment;
FIG. 5 is a diagram illustrating an inductive-charging system according to at least one example embodiment according to at least one example embodiment;
FIGS. 6A-6B are diagrams illustrating an inductive-charging signal according to at least one example embodiment;
FIG. 7 is a diagram illustrating operation of an inductive-charging system according to at least one example embodiment;
FIGS. 8A-8B are diagrams illustrating inductive-charging systems according to at least one example embodiment;
FIGS. 9A-9B are diagrams illustrating operation of an inductive-charging system according to at least one example embodiment;
FIG. 10 is a diagram illustrating operation of an inductive-charging system according to at least one example embodiment;
FIG. 11 is an interaction diagram illustrating activities associated with operation of an inductive-charging system according to at least one example embodiment;
FIG. 12 is an interaction diagram illustrating activities associated with operation of an inductive-charging system according to at least one example embodiment;
FIG. 13 is an interaction diagram illustrating activities associated with operation of an inductive-charging system according to at least one example embodiment;
FIG. 14 is an interaction diagram illustrating activities associated with operation of an inductive-charging system according to at least one example embodiment;
FIG. 15 is an interaction diagram illustrating activities associated with operation of an inductive-charging system according to at least one example embodiment;
FIGS. 16A-16C are interaction diagrams illustrating activities associated with operation of an inductive-charging system according to at least one example embodiment;
FIG. 17 is an interaction diagram illustrating activities associated with operation of an inductive-charging system according to at least one example embodiment;
FIG. 18 is an interaction diagram illustrating activities associated with operation of an inductive-charging system according to at least one example embodiment; and
FIGS. 19A-19B are interaction diagrams illustrating activities associated with operation of an inductive-charging system according to at least one example embodiment.

### DETAILED DESCRIPTION OF THE DRAWINGS

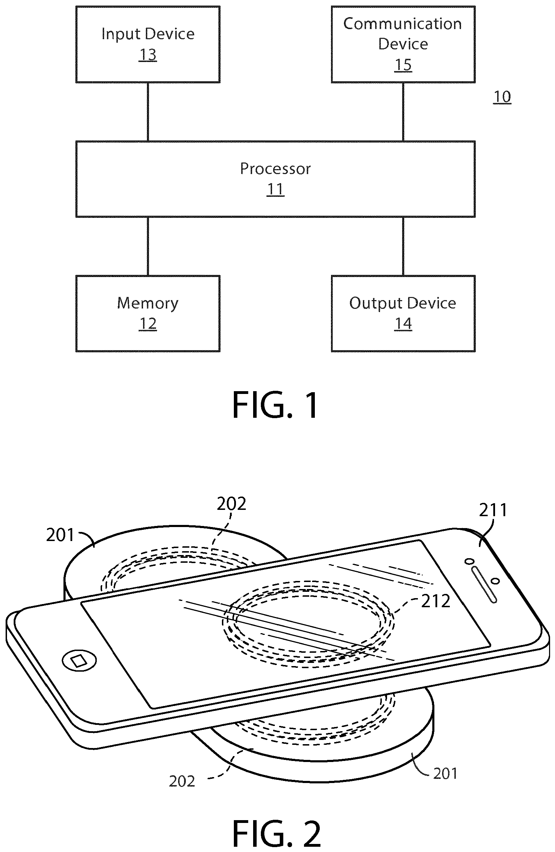

Various example embodiments and some of their potential advantages are understood by referring to FIGS. 1 through 19B of the drawings.

Some example embodiments will now further be described hereinafter with reference to the accompanying drawings, in which some, but not all, example embodiments are shown. One or more example embodiments may be embodied in many different forms and the claims should not be construed as being strictly limited to the example embodiments set forth herein; rather, these example embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with one or more example embodiments. Thus, use of any such terms should not be taken to limit the scope of example embodiments.

Additionally, as used herein, the term 'circuitry' refers to (a) hardware-only circuit implementations (e.g., implementations in analog circuitry, digital circuitry and/or any combination thereof); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that utilize software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit, an applications processor integrated circuit, a cellular network apparatus, other network apparatus, and/or other computing apparatus.

As defined herein, a "non-transitory computer readable medium," which refers to a physical medium (e.g., volatile or non-volatile memory device), can be differentiated from a "transitory computer-readable medium," which refers to an electromagnetic signal. In at least one example embodiment, a non-transitory computer readable medium is a tangible non-transitory computer readable medium.

FIG. 1 is a block diagram showing an apparatus, such as an electronic apparatus 10, according to at least one example embodiment. It should be understood, however, that an electronic apparatus as illustrated and hereinafter described is merely illustrative of an electronic apparatus that could benefit from one or more example embodiments and, therefore, should not be taken to limit the scope of the claims. While electronic apparatus 10 is illustrated and will be hereinafter described for purposes of example, other types of electronic apparatuses may readily employ one or more example embodiments. Electronic apparatus 10 may be a personal digital assistant (PDAs), a pager, a mobile computer, a desktop computer, a television, a gaming apparatus, a laptop computer, a tablet computer, a media player, a camera, a video recorder, a mobile phone, a global positioning system (GPS) apparatus, a wireless charging apparatus, an inductive-charging apparatus, an inductive-charging receiver, an inductive-charging transmitter, an inductive-charging transceiver, and/or any other types of electronic systems. Moreover, the apparatus of at least one example embodiment need not be the entire electronic apparatus, but may be a component or group of components of the electronic apparatus in other example embodiments. For example, the apparatus may be an integrated circuit, a set of integrated circuits, and/or the like.

Furthermore, apparatuses may readily employ one or more example embodiments regardless of any intent to provide mobility. In this regard, even though some example embodiments may be described in conjunction with mobile applications, it should be understood that such example embodiments may be utilized in conjunction with a variety of other applications, both in the mobile communications industries and outside of the mobile communications industries. For example, the apparatus may be, at least part of, a non-carryable apparatus, such as a large screen television, an electronic table, a kiosk, an automobile, and/or the like.

In at least one example embodiment, electronic apparatus 10 comprises at least one processor, such as processor 11 and at least one memory, such as memory 12. Processor 11 may be any type of processor, controller, embedded controller, processor core, and/or the like. In at least one example embodiment, processor 11 utilizes computer program code to cause an apparatus to perform one or more actions. Memory 12 may comprise volatile memory, such as volatile Random Access Memory (RAM) including a cache area for the temporary storage of data and/or other memory, for example, non-volatile memory, which may be embedded and/or may be removable. The non-volatile memory may comprise an EEPROM, flash memory and/or the like. Memory 12 may store any of a number of pieces of information, and data. The information and data may be used by the electronic apparatus 10 to implement one or more functions of the electronic apparatus 10, such as the functions described herein. In at least one example embodiment, memory 12 includes computer program code such that the memory and the computer program code are configured to, working with the processor, cause the apparatus to perform one or more actions described herein.

The electronic apparatus 10 may further comprise a communication device 15. In at least one example embodiment, communication device 15 comprises an antenna, (or multiple antennae), a wired connector, and/or the like in operable communication with a transmitter and/or a receiver. In at least one example embodiment, processor 11 provides signals to a transmitter and/or receives signals from a receiver. The signals may comprise signaling information in accordance with a communications interface standard, user speech, received data, user generated data, and/or the like. Communication device 15 may operate with one or more air interface standards, communication protocols, modulation types, and access types (e.g., one or more standards in the Institute of Electrical and Electronics Engineers (IEEE) 802 family of wired and wireless standards). By way of illustration, the electronic communication device 15 may operate in accordance with second-generation (2G) wireless communication protocols IS-136 (time division multiple access (TDMA)), Global System for Mobile communications (GSM), and IS-95 (code division multiple access (CDMA)), with third-generation (3G) wireless communication protocols, such as Universal Mobile Telecommunications System (UMTS), CDMA2000, wideband CDMA (WCDMA) and time division-synchronous CDMA (TD-SCDMA), and/or with fourth-generation (4G) wireless communication protocols, wireless networking protocols, such as 802.11, short-range wireless protocols, such as Bluetooth, and/or the like. Communication device 15 may operate in accordance with wireline protocols, such as Ethernet, digital subscriber line (DSL), asynchronous transfer mode (ATM), and/or the like.

Processor 11 may comprise means, such as circuitry, for implementing audio, video, communication, navigation, logic functions, and/or the like, as well as for implementing one or more example embodiments including, for example, one or more of the functions described herein. For example, processor 11 may comprise means, such as a digital signal processor device, a microprocessor device, an analog to digital converter, a digital to analog converter, processing circuitry and other circuits, for performing various functions including, for example, one or more of the functions described herein. The apparatus may perform control and signal processing functions of the electronic apparatus 10 among these devices according to their respective capabilities. The processor 11 thus may comprise the functionality to encode and interleave message and data prior to modulation and transmission. The processor 11 may additionally comprise an internal voice coder, and may comprise an internal data modem. Further, the processor 11 may comprise functionality to operate one or more software programs, which may be stored in memory and which may, among other things, cause the processor 11 to implement at least one embodiment including, for example, one or more of the functions described herein. For example, the processor 11 may operate a connectivity program, such as a conventional internet browser. The connectivity program may allow the electronic apparatus 10 to transmit and receive internet content, such as location-based content and/or other web page content, according to a Transmission Control Protocol (TCP), Internet Protocol (IP), User Datagram Protocol (UDP), Internet Message Access Protocol (IMAP), Post Office Protocol (POP), Simple Mail Transfer Protocol (SMTP), Wireless Application Protocol (WAP), Hypertext Transfer Protocol (HTTP), and/or the like, for example.

The electronic apparatus 10 may comprise a user interface for providing output and/or receiving input. The electronic apparatus 10 may comprise an output device 14. Output device 14 may comprise an audio output device, such as a ringer, an earphone, a speaker, and/or the like. Output device 14 may comprise a tactile output device, such as a vibration transducer, an electronically deformable surface, an electronically deformable structure, and/or the like. Output device 14 may comprise a visual output device, such as a display, a light, and/or the like. In at least one example embodiment, the apparatus causes display of information, the causation of display may comprise displaying the information on a display comprised by the apparatus, sending the information to a separate apparatus, and/or the like. For example, the apparatus may send the information to a separate display, to a computer, to a laptop, to a mobile apparatus, and/or the like. For example, the apparatus may be a server that causes display of the information by way of sending the information to a client apparatus that displays the information. In this manner, causation of display of the information may comprise sending one or more messages to the separate apparatus that comprise the information, streaming the information to the separate apparatus, and/or the like. The electronic apparatus may comprise an input device 13. Input device 13 may comprise a light sensor, a proximity sensor, a microphone, a touch sensor, a force sensor, a button, a keypad, a motion sensor, a magnetic field sensor, a camera, and/or the like. A touch sensor and a display may be characterized as a touch display. In an embodiment comprising a touch display, the touch display may be configured to receive input from a single point of contact, multiple points of contact, and/or the like. In such an embodiment, the touch display and/or the processor may determine input based, at least in part, on position, motion, speed, contact area, and/or the like. In at least one example embodiment, the apparatus receives an indication of an input. The apparatus may receive the indication from a sensor, a driver, a separate apparatus, and/or the like. The information indicative of the input may comprise information that conveys information indicative of the input, indicative of an aspect of the input indicative of occurrence of the input, and/or the like.

The electronic apparatus 10 may include any of a variety of touch displays including those that are configured to enable touch recognition by any of resistive, capacitive, infrared, strain gauge, surface wave, optical imaging, dispersive signal technology, acoustic pulse recognition, or other techniques, and to then provide signals indicative of the location and other parameters associated with the touch. Additionally, the touch display may be configured to receive an indication of an input in the form of a touch event which may be defined as an actual physical contact between a selection object (e.g., a finger, stylus, pen, pencil, or other pointing device) and the touch display. Alternatively, a touch event may be defined as bringing the selection object in proximity to the touch display, hovering over a displayed object or approaching an object within a predefined distance, even though physical contact is not made with the touch display. As such, a touch input may comprise any input that is detected by a touch display including touch events that involve actual physical contact and touch events that do not involve physical contact but that are otherwise detected by the touch display, such as a result of the proximity of the selection object to the touch display. A touch display may be capable of receiving information associated with force applied to the touch screen in relation to the touch input. For example, the touch screen may differentiate between a heavy press touch input and a light press touch input. In at least one example embodiment, a display may display two-dimensional information, three-dimensional information and/or the like.

In example embodiments including a keypad, the keypad may comprise numeric (for example, 0-9) keys, symbol keys (for example, #, *), alphabetic keys, and/or the like for operating the electronic apparatus 10. For example, the keypad may comprise a conventional QWERTY keypad arrangement. The keypad may also comprise various soft keys with associated functions. In addition, or alternatively, the electronic apparatus 10 may comprise an interface device such as a joystick or other user input interface.

Input device 13 may comprise a media capturing element. The media capturing element may be any means for capturing an image, video, and/or audio for storage, display, or transmission. For example, in at least one example embodiment in which the media capturing element is a camera module, the camera module may comprise a digital camera which may form a digital image file from a captured image. As such, the camera module may comprise hardware, such as a lens or other optical component(s), and/or software for creating a digital image file from a captured image. Alternatively, the camera module may comprise only the hardware for viewing an image, while a memory device of the electronic apparatus 10 stores instructions for execution by the processor 11 in the form of software for creating a digital image file from a captured image. In at least one example embodiment, the camera module may further comprise a processing element that is separate from processor 11 for processing data, such as image data. The camera module may provide data, such as image data, in one or more of various formats. In at least one example embodiment, the camera module comprises an encoder, a decoder, and/or the like for compressing and/or decompressing image data. The encoder and/or decoder may encode and/or decode according to a standard format, for example, a Joint Photographic Experts Group (JPEG) standard format.

FIG. 2 is a diagram illustrating inductive-charging apparatuses according to at least one example embodiment. The example of FIG. 2 is merely an example and does not limit the scope of the claims. For example, the configuration of the inductive-charging apparatus may vary, the apparatus being charged may vary, the operation of the inductive-charging apparatus may vary, and/or the like.

In modern times, apparatuses are often powered by batteries that may require charging when the battery has become depleted. For example, apparatuses such as mobile telephones, computers, and/or the like may be powered by batteries that are occasionally recharged. In circumstances such as these, it may be desirable to allow for quick and/or convenient charging of an apparatus. For example, it may be desirable for an apparatus to be charged wirelessly. In circumstances such as these, an electromagnetic field may be used to transfer energy from a first apparatus to a second apparatus by way of aligning the electromagnetic field with a receiver, such as a coil, comprised by the second apparatus. Such a transfer of energy by way of an electromagnetic field, a magnetic field, etc. may be referred to as inductive-charging, wireless charging, and/or the like. An apparatus that transmits energy by way of an electromagnetic field, a magnetic field, and/or the like may be referred to as inductive-charging transmitter. An inductive-charging transmitter may be a charging station, a wireless charging pad, an inductive charger, and/or the like. An apparatus that receives energy by way of an electromagnetic field, a magnetic field, and/or the like may be referred to as inductive-charging receiver. An inductive-charging receiver may be a mobile telephone, a tablet, any apparatus configured to be charged wirelessly, and/or the like. For example, a first apparatus, such as an inductive-charging transmitter, may be able to transmit energy to a second apparatus, such as an inductive-charging receiver, when the first apparatus and the second apparatus each comprise a coil and the first and the second apparatuses are placed within sufficient proximity with each other such that coupling may occur between the coils. In this manner, an electromagnetic field generated when a coil in the first apparatus is excited may transfer energy by way of generating an electromagnetic signal, a magnetic signal, etc., which may be received by the coil of the second apparatus. A coil may be excited by energizing the coil with electricity such that the coil emanates a magnetic field. The magnetic field emanated by such an excitation may be referred to as an inductive-charging signal. For example, an inductive-charging transmitter may charge another apparatus by way of the Qi interface developed by the Wireless Power Consortium, the PMA interface developed by the Power Matters Alliance, and/or any other wireless charging protocol that currently exists or that may be defined in the future.

In some circumstances, it may be desirable to configure an inductive-charging transmitter such that resonant coupling may be achieved between the inductive-charging transmitter and an apparatus being charged by the inductive-charging transmitter. Resonant coupling may refer to the near field transmission of electrical energy between two resonant circuits that are tuned to resonate at substantially the same frequency. For example, the resonant circuits may be considered to be tuned to resonate at substantially the same frequency in circumstances where a difference in resonant frequency between the two resonant circuits is within a threshold tolerance. Resonant coupling may occur when a pair of coils are configured to resonate in separate resonant circuits at the same frequency. Resonant coupling may allow power coupling between two coils despite weak mutual coupling between the coils. This may allow adequate energy transfer at a greater distance between a coil comprised by the inductive-charging transmitter and a coil comprised by an apparatus being charged, less optimal alignment of the flux compared to a traditional inductive coupling arrangement, and/or the like. A coil in an inductive-charging apparatus, such as an inductive-charging transmitter, an inductive charging receiver, and/or the like, may be referred to as a charging coil.

The example of FIG. 2 illustrates an inductive-charging transmitter 201 comprising coil 202. Coil 202 is internal to the housing of inductive-charging transmitter 201. The example of FIG. 2 further illustrates inductive-charging receiver 211 comprising coil 212. Coil 212 is internal to the housing of inductive-charging receiver 211. It can be seen that in the example of FIG. 2, an inductive-charging transmitter 201 is within sufficient proximity of inductive-charging receiver 212 that coupling may occur between the coils. In this manner, coil 202 and coil 212 may be inductively coupled such that an electrical field generated by coil 202 when coil 202 is excited may transfer energy to coil 212, may induce a current in coil 212, and/or the like. Even though inductive-charging transmitter 201 is illustrated as a charging pad, and inductive-charging receiver 211 is illustrated as a mobile telephone, it should be understood that inductive-charging transmitter 201 and inductive-charging receiver 211 may be any type of apparatus.

An inductive-charging transmitter such as first apparatus 201 of FIG. 2 may efficiently transfer power to another apparatus when certain parameters are maintained. For example, first apparatus 201 may efficiently transfer power to second apparatus 211 when coils 202 and 212 are of identical size and shape, when coils 202 and 212 are perfectly aligned, when coils 202 and 212 have a minimum distance between them, and/or the like. Coils 202 and 212 may be considered perfectly aligned when coils 202 and 212 are symmetrically aligned along an axis extending through the electrically conductive coil center points.

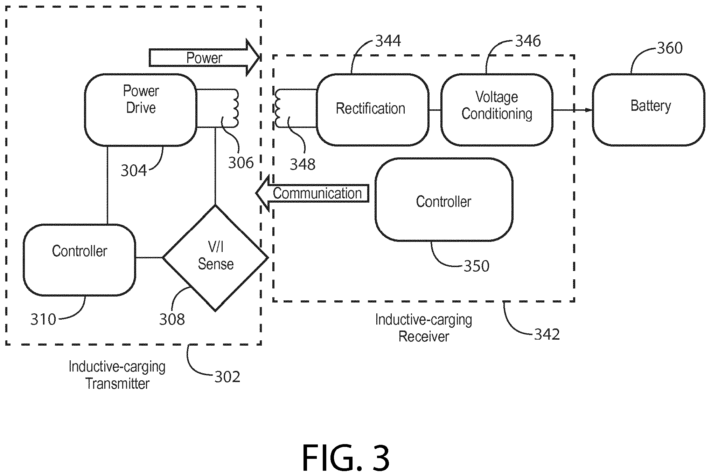

FIG. 3 is a diagram illustrating an inductive-charging system according to at least one example embodiment. The example of FIG. 3 is merely an example and does not limit the scope of the claims. For example, the type of apparatuses may vary, the number of apparatuses may vary, the relative location of the apparatuses may vary, and/or the like.

An inductive-charging system may comprise various components that interact with one another. For example, an inductive-charging system may comprise at least one inductive-charging transmitter, and at least one inductive-charging receiver to facilitate transmission and/or reception of an inductive-charging signal, a charge request signal, and/or the like. The inductive-charging transmitter and the inductive-charging receiver may comprise one or more components to further facilitate such signals.

The example of FIG. 3 illustrates an inductive charging system comprising inductive-charging transmitter 302 and inductive-charging receiver 342. The inductive charging system of FIG. 3 may be utilized to charge a power storage apparatus. For example, the inductive charging system of FIG. 3 may be utilized to charge battery 360. It can be seen that inductive-charging transmitter 302 comprises controller 310, which controls power drive 304 and voltage/current sensing circuit 308. It can be further seen that power drive 304 and voltage/current sensing circuit 308 are coupled to charging coil 306. In this manner, inductive-charging transmitter 302 may transmit power and receive communication signals by way of charging coil 306.

It can be seen that inductive-charging receiver 342 comprises controller 350. It should be understood that controller 350 is communicatively coupled to rectification circuit 344 and voltage conditioning circuit 346. It can be seen that rectification circuit 344 and voltage conditioning circuit 346 are coupled to charging coil 348. In this manner, inductive-charging receiver 342 may receive power and transmit communication signals by way of charging coil 348. It can be further seen that voltage conditioning circuit 346 is coupled to battery 360. In this manner, battery 360 may be charged by inductive-charging receiver 342. For example, battery 360 may be charged by way of an inductive-charging signal transmitted by inductive-charging transmitter 302 and received by inductive-charging receiver 342.

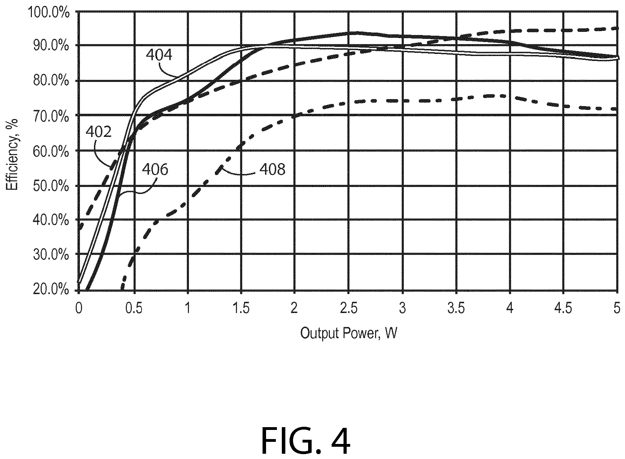

FIG. 4 is a diagram illustrating efficiency in an inductive-charging system according to at least one example embodiment. The example of FIG. 4 is merely an example and does not limit the scope of the claims. For example, the efficiency may vary, the output power may vary, the charging mode may vary, and/or the like.

FIG. 4 illustrates the change in efficiency of inductive-charging system 408 as the efficiency and power output/input of inductive-charging transmitter 402, magnetic components 404 (e.g. inductors, charging coils, etc.), and inductive-charging receiver 406 vary. It can be seen that, generally, as the efficiency and power output increase, the efficiency and output power of inductive-charging system 408 increases.

When performing inductive-charging between an inductive-charging transmitter and an inductive-charging receiver, a number of power control strategies may be utilized. For example, a voltage of an inductive-charging signal be controlled by the transmitter, the pulse width of an inductive-charging signal may be controlled by the transmitter, the frequency of an inductive-charging signal may be controlled by the transmitter, and/or the like. The efficiency of inductive-charging systems may significantly decrease when the inductive-charging signal is not a "full rate" signal. A full rate signal may refer to an inductive-charging signal having an optimized voltage, pulse width, and/or frequency. For example, it can be seen that the efficiency of the charging signal for inductive-charging receiver 402 highly efficient when the output power is five watts. Therefore, if inductive-charging receiver 402 is configured to be capable of receiving a 5 watt charging signal (for example without causing damage to the battery), the 5 watt charging signal may be considered to be a full rate signal. In such an example, a 4 watt charging signal for inductive-charging receiver 402 could be referred to as a charging signal that has a rate that is less than full rate.

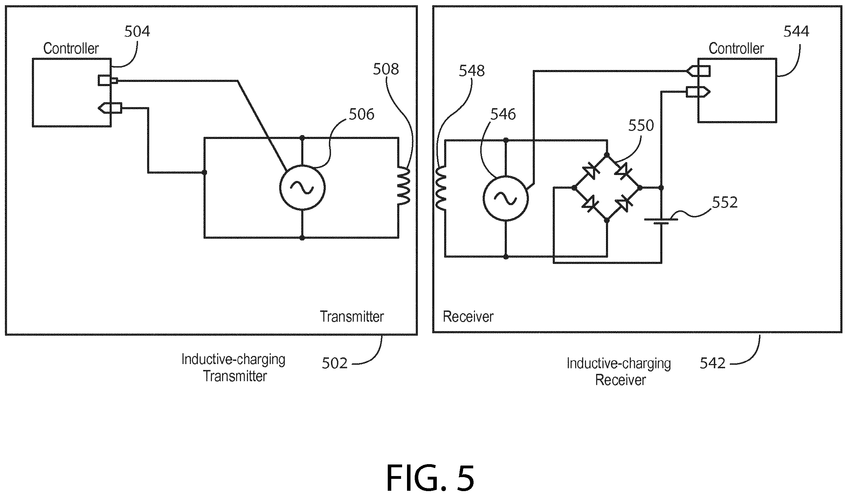

FIG. 5 is a diagram illustrating an inductive-charging system according to at least one example embodiment according to at least one example embodiment. The example of FIG. 5 is merely an example and does not limit the scope of the claims. For example, the type of apparatuses may vary, the number of apparatuses may vary, the relative location of the apparatuses may vary, and/or the like.

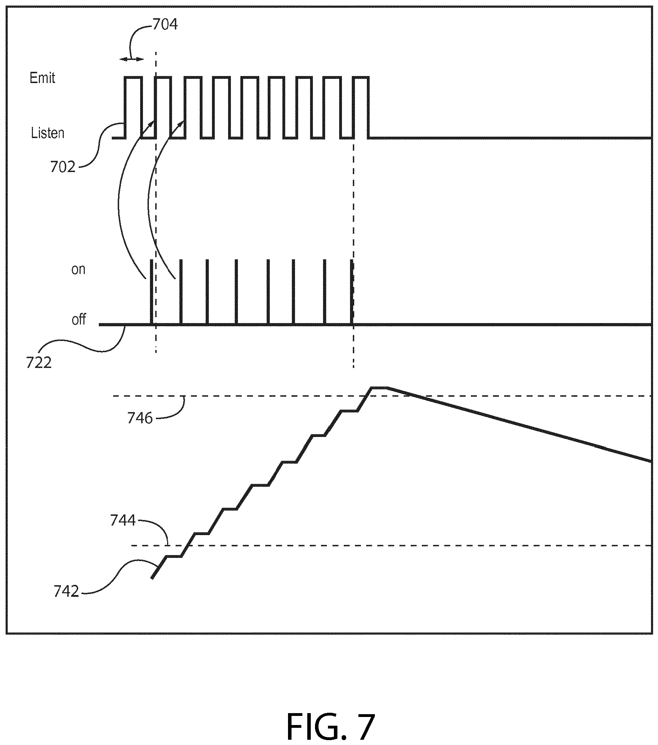

The example of FIG. 5 illustrates an inductive charging system comprising inductive-charging transmitter 502 and inductive-charging receiver 542. The inductive charging system of FIG. 5 may be utilized to charge a power storage apparatus. For example, the inductive charging system of FIG. 5 may be utilized to charge battery 552. It can be seen that inductive-charging transmitter 502 comprises controller 504. Controller 504 may be configured to cause inductive-charging transmitter 502 to perform various actions. For example, controller 504 may cause inductive-charging transmitter 502 to perform the actions described with regard to FIG. 7-FIG. 19. In the example of FIG. 5, controller 504 is communicatively coupled to signal generator 506, which generates an inductive-charging signal. For example, signal generator 506 may comprise an oscillator combined with a full bridge mosfet push-pull output stage, an oscillator combined with a half bridge mosfet push-pull output stage, and/or the like. It can be further seen that, in FIG. 5, signal generator 506 is coupled to charging coil 508, which is configured to transmit an inductive-charging signal to an inductive-charging receiver. In this manner, inductive-charging transmitter 502 may transmit power and receive communication signals by way of charging coil 508. For example, controller 504 may cause charging coil 508 to transmit an inductive-charging signal by actuating signal generator 506. Controller 504 may cause termination of transmission of an inductive-charging signal. For example, controller 504 may cease actuation of the signal generator. In at least one example embodiment, signal generator 506 is selectively coupled to charging coil 508. For example, signal generator 506 may be selectively coupled to charging coil 508 by way of a switch, a transistor, a relay, and/or the like. In this manner, causing the charging coil to transmit the inductive charging signal may comprise causing establishment of coupling the signal generator to the charging coil. In at least one example embodiment, causing the charging coil to terminate transmission of the inductive-charging signal comprises termination of coupling of the signal generator to the charging coil.

It can be seen that inductive-charging receiver 542 comprises controller 544. It should be understood that controller 544 is communicatively coupled to rectifier circuit 550 and voltage conditioning circuit 546. Controller 504 may be configured to cause inductive-charging receiver 542 to perform various actions. For example, controller 544 may cause inductive-charging transmitter 542 to perform the actions described with regard to FIG. 7-FIG. 19B. It can be seen that rectifier circuit 550 and voltage conditioning circuit 546 are coupled to charging coil 548, which is configured to receive an inductive charging signal from an inductive charging transmitter. In this manner, rectifier circuit 550 may receive the inductive charging signal and produce a rectified charging signal. It can be further seen that rectifier circuit 550 is coupled to battery 552. In this manner, battery 552 may be charged by inductive-charging receiver 542. For example, battery 552 may receive the rectified charging signal such that the rectified charging signal causes the battery to charge.

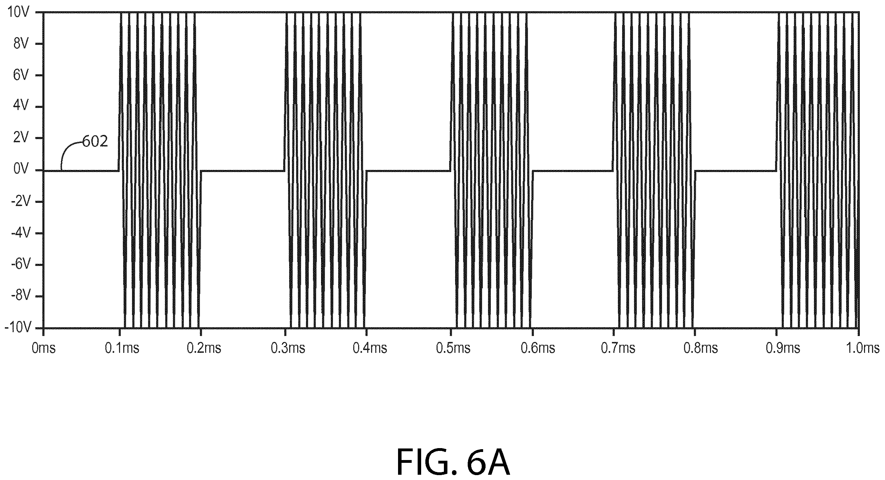

FIGS. 6A-6B are diagrams illustrating an inductive-charging signal according to at least one example embodiment. The examples of FIGS. 6A-6B are merely examples and do not limit the scope of the claims. For example, the type of inductive-charging signal may vary, the protocol of the inductive-charging signal may vary, the duration of the inductive-charging signal may vary, and/or the like.

As previously described, the efficiency of inductive-charging systems dramatically decrease when the inductive-charging signal is not a "full rate" signal. In circumstances such as these, it may be desirable for an inductive-charging transmitter to transmit inductive-charging signals that are optimized to be as close to a full rate signal as practicably possible. For example, an inductive-charging signal may be transmitted that has a substantially fixed amplitude and a frequency corresponding to a resonant frequency of an inductive-charging receiver. For instance, the frequency may be tuned to approximately match the resonant frequency to allow for an efficient power transfer, may be tuned away from the resonant frequency to limit a power transfer, and/or the like. In such an example, the inductive-charging transmitter may transmit the inductive-charging signal with a full power transmission amplitude. For example, if the maximum output voltage of the inductive-charging transmitter is 10 volts, then a full power transmission amplitude for the inductive-charging transmitter may correspond with 10 volts. In this manner, the inductive-charging signal may be optimized such that the signal is a full rate signal.

It should be understood that a frequency may correspond with the resonant frequency of an inductive-charging receiver in circumstances where the frequency is within a threshold tolerance of the resonant frequency of the inductive charging receiver. For example, the resonant frequency of an inductive-charging receiver may vary with noise, circuit characteristics, component value drift, and/or the like. In circumstances such as these, the threshold tolerance may refer to a discrete value, a percentage, and/or the like. For example, an inductive-charging signal having a frequency within .05% of the resonant frequency of an inductive-charging receiver may be considered to correspond with the resonant frequency of the inductive-charging receiver.

It should be understood that a substantially fixed amplitude may refer to an amplitude that varies within a threshold tolerance. For example, an amplitude of an inductive-charging signal may vary due to noise, circuit characteristics, component value drift, and/or the like. In circumstances such as these, the threshold tolerance may refer to a discrete value, a percentage, and/or the like. For example, an inductive-charging signal having an amplitude within 0.1% of the full power transmission amplitude may be considered to have a substantially fixed amplitude.

FIG. 6A illustrates a waveform 602 corresponding with a series of inductive-charging signal "bursts." It can be seen that each burst of waveform 602 has a period of 0.1ms and an amplitude of 20 volts peak-to-peak. It can also be seen that each burst of waveform 602 has a substantially fixed amplitude. In this manner, waveform 602 may represent a full rate inductive-charging signal in some circumstances. For example, waveform 602 may represent a full rate inductive-charging signal for an inductive-charging transmitter having a full power transmission amplitude of 20 volts peak-to-peak, and an inductive-charging receiver having a resonant frequency that corresponds with a period of 0.1ms.

In some circumstances it may be desirable to convert an inductive-charging signal into a signal that is more appropriate for non-wirelessly charging a battery. For example, an inductive charging signal may comprise a signal that alternates between a positive and a negative voltage. In some circumstances, it may be desirable to charge the battery with a charging signal that avoids a negative voltage. In circumstances such as these, it may be desirable to rectify the inductive-charging signal to form a charging signal to charge a power storage apparatus, such as a battery.

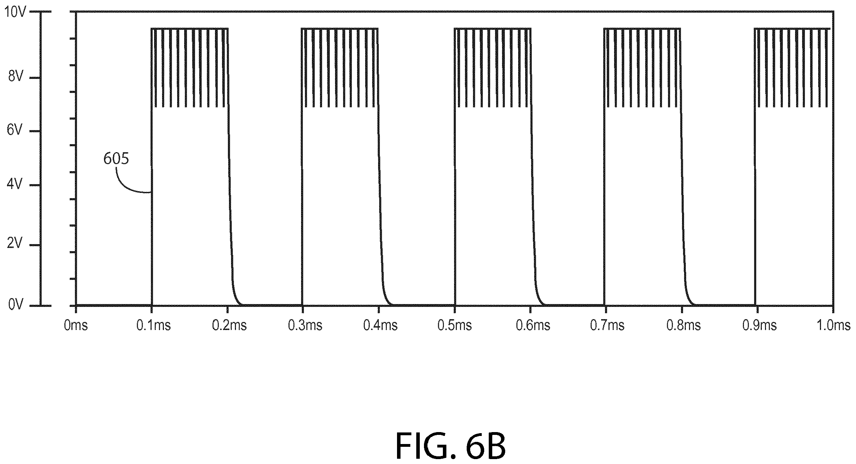

FIG. 6B illustrates a waveform 605 corresponding with a series of inductive-charging signal "bursts." It can be seen that each burst of waveform 605 has a period of approximately 0.1ms and an amplitude of near 10 volts. It can also be seen that each burst of waveform 605 has a substantially fixed amplitude. In this manner, waveform 605 may represent a full rate inductive-charging signal in some circumstances. For example, waveform 605 may represent a full rate inductive-charging signal for an inductive-charging transmitter having a full power transmission amplitude of approximately 10 volts, and an inductive-charging receiver having a resonant frequency that corresponds with a period of 0.1ms. It should be understood that waveform 605 may represent a rectification of waveform 602 of FIG. 6A. For example, it can be seen that waveform 602 and waveform 605 comprise bursts of a substantially similar frequency and amplitude, but that waveform 605 comprises entirely positive voltages, while waveform 602 comprises positive and negative voltages.

FIG. 7 is a diagram illustrating operation of an inductive-charging system according to at least one example embodiment. The example of FIG. 7 is merely an example and does not limit the scope of the claims. For example, the inductive charging system may vary, the operation may vary, the apparatuses comprising the system may vary, and/or the like.

In some circumstances, a user may leave an apparatus on a wireless charger on a charge pad for an extended period of time, may let an apparatus battery deplete below a certain power level, and/or the like. In such circumstances, it may be desirable to charge the battery in a particular manner. For example, it may be beneficial for the battery to be charged to a particular capacity, to occasionally have the charge refreshed, and/or the like. In circumstances such as these, it may be desirable for an inductive-charging system to operate in a particular manner. For example, an inductive-charging system may operate more efficiently if transmission of an inductive-charging signal is limited to periods where the transmission is requested from an apparatus that is configured to be charged. For example, an inductive-charging transmitter may be more efficient if it limits transmitting to periods after a charge request from an inductive-charging receiver. For example, an inductive-charging receiver may transmit a charge request signal during periods where a power level falls below a threshold. For example, an inductive-charging receiver may transmit a charge request signal after a battery is depleted below 90 percent capacity.

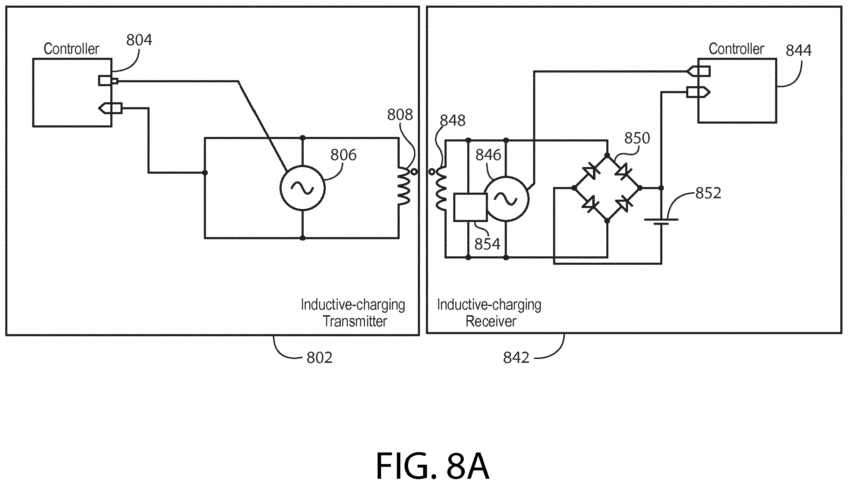

In some circumstances, an inductive-charging receiver may have a limited communication capacity, similar as described regarding FIGS 8A-8B. For example, an inductive-charging receiver may have simple communication circuits that can merely inform the inductive-charging transmitter that the inductive-charging receiver is requesting power without an indication of how much power is being requested. For example, the inductive-charging receiver may be limited to an "on or off' charge request signal. In circumstances such as these, it may be desirable to limit the transmission of an inductive-charging signal to a short burst. In this manner, there may be a lower risk of sending excess power to the inductive-charging receiver, wasting power, and/or the like. In at least one example embodiment, transmission of an inductive-charging signal is terminated after elapse of a transmission duration.

In some circumstances, an inductive-charging receiver may desire power in excess of an initial burst of an inductive-charging signal. For example, inductive-charging receiver may determine that a battery charge level is below a battery charge termination threshold after termination of the inductive-charging signal. For instance, the inductive-charging receiver may measure the battery voltage and compare the measured voltage to the battery charge termination threshold. In circumstances such as these, the receiver may request an additional burst from the inductive-charging transmitter by way of an additional charge request signal. In at least one example embodiment, a charge request signal signifies a request for the inductive-charging transmitter to transmit another inductive-charging signal.

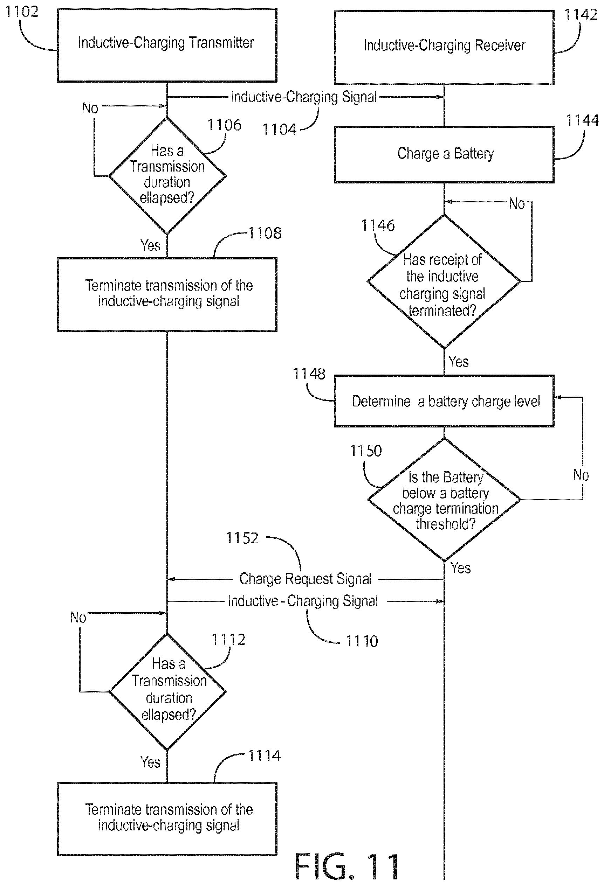

FIG. 7 illustrates a timing diagram between an inductive-charging transmitter, an inductive-charging receiver, and a battery. The timing diagram of FIG. 7 comprises waveforms 702, 722, and 742. In the example of FIG. 7, waveform 702 corresponds with a series of inductive-charging signal bursts from an inductive-charging receiver. It can be seen in the example of FIG. 7 that each inductive-charging signal burst has a transmission duration approximately equal to transmission duration 704. In the example of FIG. 7, waveform 722 corresponds with a series of charge request signals. It can be seen that each charge request signal of waveform 722 occurs after termination of an inductive-charging signal burst in waveform 702. In this respect, the example of FIG. 7 may illustrate a timing diagram associated with a series of interactions between an inductive-charging transmitter and an inductive-charging receiver similar as described in FIG. 11.

In the example of FIG. 7, waveform 742 corresponds with a power level of a battery. It can be seen that the power level of the battery rises during periods where waveform 702 indicates an inductive-charging signal burst is being transmitted, and that the power level of the battery falls and/or remains steady during periods where waveform 702 indicates an inductive-charging signal burst has terminated. It can also be seen that waveform 722 indicates a succession of charge request signals when the power level indicated on waveform 742 is below power level 746. Similarly, it can be seen that after the power level indicated on waveform 742 surpasses power level 746, waveform 722 no longer indicates a charge request signal even after the power level falls below power level 746. In this manner power level 746 may represent a battery charge termination threshold. It should be understood that power level 744 may indicate battery charge request threshold. In this manner, in circumstances where waveform 744 drops below power level 744, a charge request signal may be triggered. In at least one example embodiment, the charge request signal is received by way of a communication device. For example, the charge request signal may be received by voltage/current sensing circuit 308 of FIG. 3. In another example, the charge request signal may be received by a communication device such as a Qi interface a PMA interface, and/or any other charging protocol.

FIGS. 8A-8B are diagrams illustrating inductive-charging systems according to at least one example embodiment. The examples of FIGS. 8A-8B are merely examples and do not limit the scope of the claims. For example, the type of apparatuses may vary, the number of apparatuses may vary, the relative location of the apparatuses may vary, and/or the like.

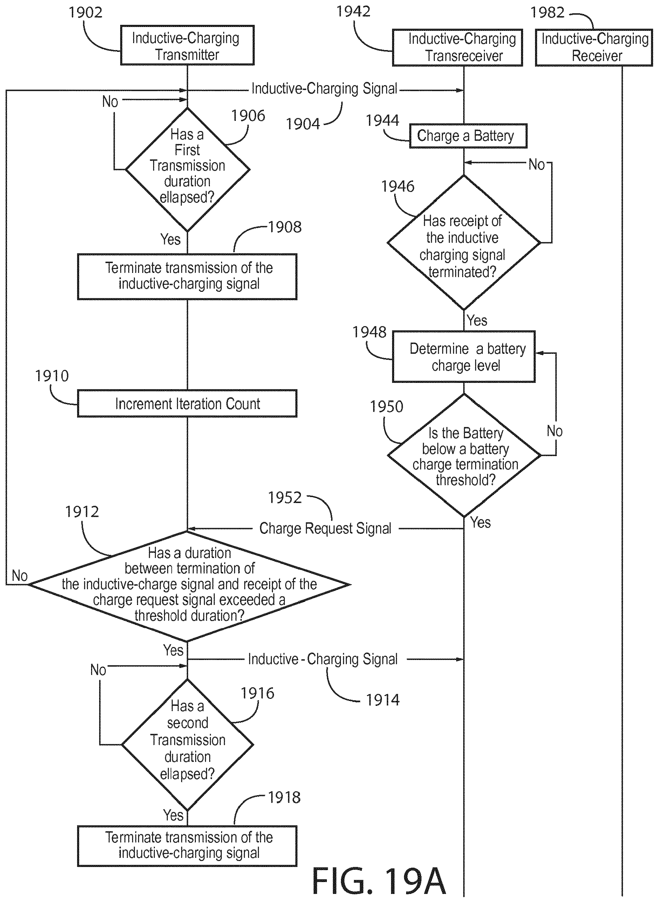

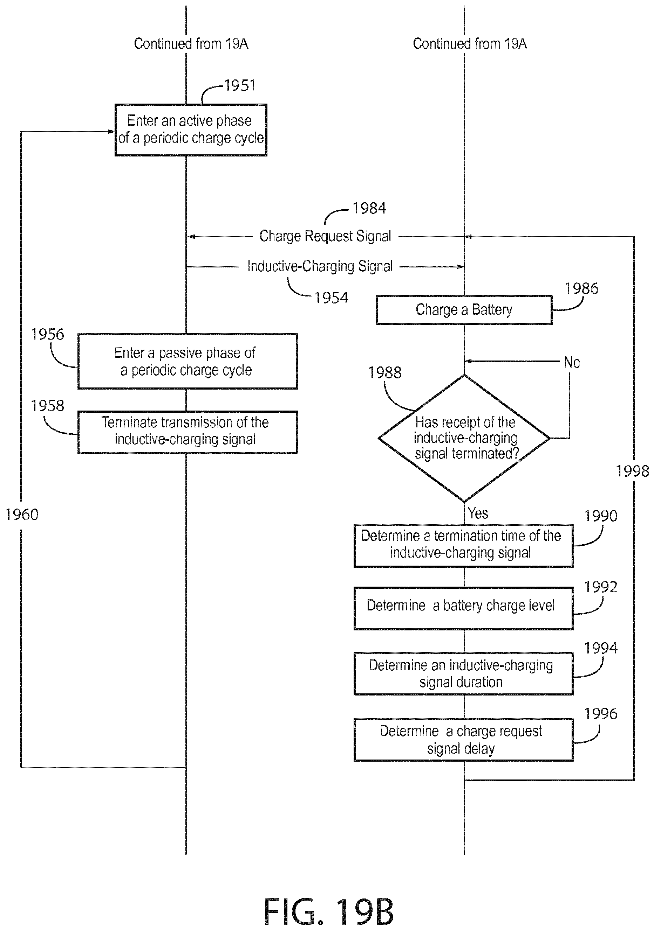

In some circumstances, the manner in which communication is controlled may significantly influence the complexity of the communications system. In some circumstances, it may be desirable for an inductive-charging receiver to have a simplified communications system. For instance, in an example control scheme for a simplified communications system, the inductive-charging receiver may periodically check the charge level of a battery. If the battery charge falls below a certain level (e.g. 80% of capacity), the inductive-charging receiver may transmit a simple charge request signal to an inductive charging receiver that merely indicates a desire to receive power, and may receive an inductive-charging signal in response, similar as described regarding FIG. 7 and FIG 11. The inductive-charging receiver may then charge the battery by way of the inductive-charging signal. A simplified control scheme such as this may shift a significant amount of the charging control complexity to the inductive charging transmitter. For example, since the simple charge request signal does not indicate how much power is being requested, the inductive-charging transmitter may make such a determination without assistance from the inductive charging receiver. Such an arrangement is advantageous in many circumstances, because it significantly reduces the complexity of the control system of the inductive-charging receiver. This may allow for the control system of the inductive-charging receiver to consume less power, utilize fewer components, share components with other subsystems of the inductive-charging receiver, have a smaller footprint and/or the like. For instance, a simplified communications system may allow for the inductive-charging receiver to transmit a charge request signal by way of a charging coil, and receive an inductive-charging signal by way of the same charging coil. For example, an inductive-charging receiver may utilize a simplified communication circuit, similar as described regarding FIGS. 8A-8B, and a control scheme similar as described regarding FIG. 7, FIGS. 9A-9B, FIGS. 11-15, and FIGS. 16A-16C may enable operation of the associated communication circuit. Such a simplified communications system may allow for combination with another apparatus. For example, it may allow for an apparatus combining an inductive-charging receiver with an inductive-charging transmitter, similar as described regarding inductive-charging transceiver 1942 of FIGS. 19A-19C.

The example of FIG. 8A illustrates an inductive charging system comprising inductive-charging transmitter 802 and inductive-charging receiver 842. The inductive charging system of FIG. 8A may be utilized to charge a power storage apparatus. For example, the inductive charging system of FIG. 8A may be utilized to charge battery 852. It can be seen that inductive-charging transmitter 802 comprises controller 804. Controller 804 may be configured to cause inductive-charging transmitter 802 to perform various actions. For example, controller 804 may cause inductive-charging transmitter 802 to perform the actions described with regard to FIG. 7-FIG. 19B. Controller 804 is communicatively coupled to signal generator 806, which generates an inductive-charging signal. It can be further seen that signal generator 806 is coupled to charging coil 808, which is configured to transmit an inductive-charging signal to an inductive-charging receiver. In this manner, inductive-charging transmitter 802 may transmit power and receive communication signals by way of charging coil 808.

It can be seen that inductive-charging receiver 842 comprises controller 844. It should be understood that controller 844 is communicatively coupled to rectifier circuit 850 and voltage conditioning circuit 846. Controller 804 may be configured to cause inductive-charging receiver 842 to perform various actions. For example, controller 844 may cause inductive-charging transmitter 842 to perform the actions described with regard to FIG. 7-FIG. 19B. It can be seen that rectifier circuit 850 and voltage conditioning circuit 846 are coupled to charging coil 848, which is configured to receive an inductive charging signal from an inductive charging transmitter. In this manner, the rectifier circuit may receive the inductive charging signal and produce a rectified charging signal. It can be further seen that rectifier circuit 850 is coupled to battery 852. In this manner, battery 852 may be charged by inductive-charging receiver 842. For example, battery 852 may receive the rectified charging signal such that the rectified charging signal causes the battery to charge. It can be further seen that inductive-charging receiver 842 comprises charge pump circuit 854, which is coupled to charging coil 848. In this manner, inductive-charging receiver 842 may store energy from an inductive charging signal in charge pump circuit 854. Charge pump circuit 854 may be used to drive a simplified communications system. For example, one or more components comprised by charge pump circuit 854 may form a resonant circuit with charging coil 848, and charge pump circuit 854 may be discharged to charging coil 848 when the resonant circuit is formed. In this manner, the discharge of energy into charging coil 848 may cause transmission of a charge request signal. In at least one example embodiment, discharging of the energy stored in charge pump circuit 854 to charging coil 848 comprises precluding discharge of the energy stored in charge pump circuit 854 to battery 852.

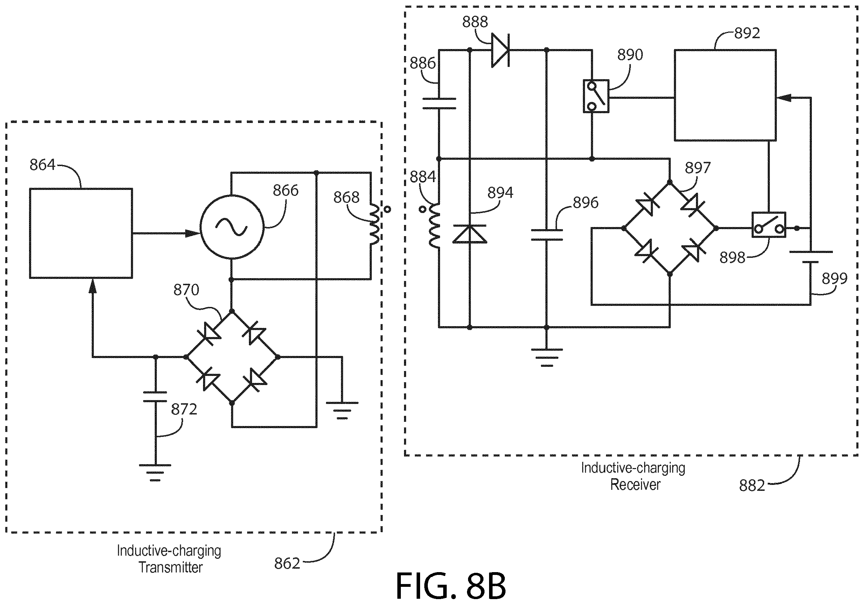

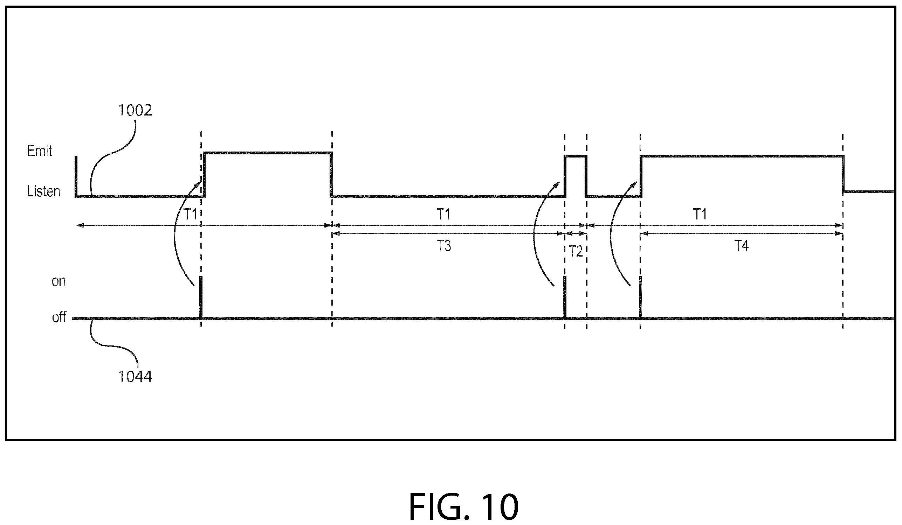

As previously described, in some circumstances, the manner in which communication is controlled may significantly influence the complexity of the communications system. In some circumstances, it may be desirable for an inductive-charging transmitter to have a simplified communications system. For instance, in an example control scheme for a simplified communications system, the inductive-charging transmitter may have a periodic charge cycle. If during a point in a particular period within the charge cycle the inductive-charging transmitter receives a charge request signal, the inductive-charging transmitter may transmit an inductive charging signal for the remainder of that period. The inductive-charging receiver may then charge the battery by way of the inductive-charging signal. A simplified control scheme such as this may shift a significant amount of the charging control complexity to the inductive-charging receiver. For example, since the inductive charge signal terminates at the end of the period, the inductive-charging transmitter is unburdened from monitoring how much power should be transmitted, the inductive-charging transmitter may simply transmit until the charge cycle period completes. Such an arrangement may be advantageous in many circumstances, because it significantly reduces the complexity of the control system of the inductive-charging transmitter. This may allow for the control system of the inductive-charging transmitter to consume less power, utilize fewer components, share components with other subsystems of the inductive-charging receiver, have a smaller footprint, and/or the like. For instance, a simplified communications system may allow for the inductive-charging transmitter to receive a charge request signal by way of a charging coil, and transmit an inductive-charging signal by way of the same charging coil. For example, an inductive-charging transmitter may utilize a simplified communication circuit similar as described regarding FIG 8B., and a control scheme similar as described regarding FIG. 10 and FIGS. 17-18 may enable operation of the associated communication circuit. Such a simplified communications system may allow for combination with another apparatus. For example, such a system may allow for a combination of an inductive-charging receiver with an inductive-charging transmitter, similar as described regarding inductive-charging transceiver 1942 of FIGS. 19A-19C.

The example of FIG. 8B illustrates an inductive charging system comprising inductive-charging transmitter 862 and inductive-charging receiver 882. The inductive charging system of FIG. 8B may be utilized to charge a power storage apparatus. For example, the inductive charging system of FIG. 8B may be utilized to charge battery 899. It can be seen that inductive-charging transmitter 862 comprises controller 864. Controller 864 may be configured to cause inductive-charging transmitter 862 to perform various actions. For example, controller 864 may cause inductive-charging transmitter 862 to perform the actions described with regard to FIG. 7-FIG. 19B. Controller 864 is communicatively coupled to signal generator 866, which generates an inductive-charging signal. It can be further seen that signal generator 866 is coupled to charging coil 868, which is configured to transmit an inductive-charging signal to an inductive-charging receiver. In this manner, inductive-charging transmitter 862 may transmit power and receive communication signals by way of charging coil 868. It can be seen that inductive-charging transmitter 862 further comprises rectifier circuit 870, which is coupled to charging coil 868, and capacitor 872, which is coupled between rectifier circuit 870 and circuit ground. In this manner, inductive-charging transmitter 862 is configured to receive a charge request signal by way of charging coil 868, and rectify the charge request signal by way of rectifier circuit 870 to form a rectified charge request signal. For example, charging coil 868 may receive a current burst, which may be rectified to form a rectified charge request signal. In this respect, inductive-charging transmitter 862 comprises a simplified communications system. Capacitor 872 may serve to stabilize the rectified charge request signal. For example, capacitor 872 may serve as a low pass filter. In at least one example embodiment, a charge request signal comprises at least one current burst.

As previously described, in some circumstances, it may be desirable for an inductive-charging receiver to have a simplified communications system. It can be seen that inductive-charging receiver 882 comprises controller 892. It should be understood that controller 892 is communicatively coupled to rectifier circuit 897. Controller 892 may be configured to cause inductive-charging receiver 882 to perform various actions. For example, controller 892 may cause inductive-charging transmitter 882 to perform the actions described with regard to FIG. 7 through FIG. 19B. It can be seen that rectifier circuit 897 is coupled to charging coil 884, which is configured to receive an inductive charging signal from an inductive charging transmitter. In this manner, the rectifier circuit may receive the inductive charging signal and produce a rectified charging signal. It can be further seen that rectifier circuit 897 is coupled to battery 899. In this manner, battery 899 may be charged by inductive-charging receiver 882. For example, battery 899 may receive the rectified charging signal such that the rectified charging signal causes the battery to charge. It can be further seen that inductive-charging receiver 882 comprises charge pump circuit which is coupled to charging coil 884. The charge pump circuit of inductive-charging receiver 882 comprises capacitors 886 and 896, and diodes 888 and 894. In this manner, inductive-charging receiver 882 may store energy from an inductive charging signal in charge pump circuit 854. The charge pump circuit may be used to drive a simplified communications system. For example, capacitor 896 of the charge pump circuit may form a resonant circuit with charging coil 884, and capacitor 896 may be discharged to charging coil 884 when the resonant circuit is formed. In this manner, the discharge of energy into charging coil 884 may cause transmission of a charge request signal. It should be understood that controller 892 is configured to terminate coupling between the charge pump circuit and charging coil 884 by way of selective coupling 890. In at least one example embodiment, controller 892 is configured to establish coupling between the charge pump circuit and charging coil 884 within a predetermined current burst duration from the establishment of coupling between the charge pump circuit and charging coil 884. It should be understood that controller 892 is configured to terminate the coupling between charging coil 884 and battery 899 by way of selective coupling 898. In this manner, precluding of discharge of the energy stored in the charge pump circuit to battery 899 may comprise termination of coupling between battery 899 and charging coil 884. In at least one example embodiment, controller 892 is configured to establish coupling between charging coil 884 and battery 899 within a predetermined current burst duration from the termination of coupling between battery 899 and the charging coil 884.

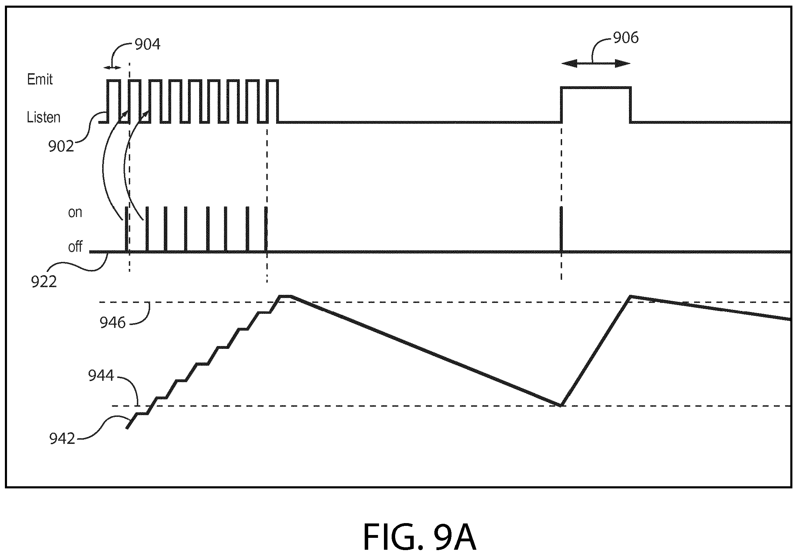

FIGS. 9A-9B are diagrams illustrating operation of an inductive-charging system according to at least one example embodiment. The examples of FIGS. 9A-9B are merely examples and do not limit the scope of the claims. For example, the inductive charging system may vary, the operation may vary, the apparatuses comprising the system may vary, and/or the like.

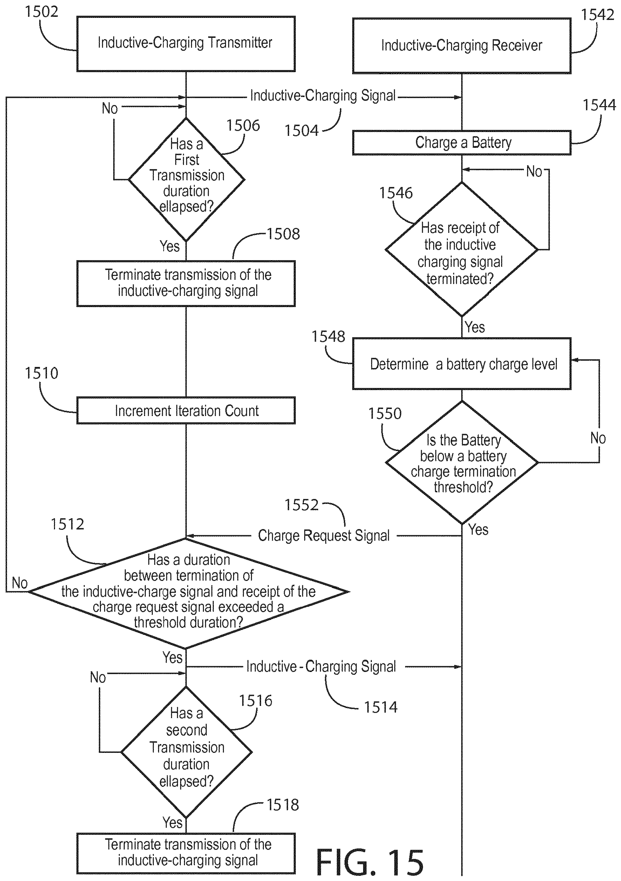

As previously described, in some circumstances an inductive-charging receiver may have a limited communication capacity. For example, the inductive-charging receiver may have a simplified communications system similar as described regarding FIGS. 8A-8B. As illustrated in the example of FIG. 7, in some circumstances, such a simplified communications system may cause the inductive-charging receiver to send multiple charge request signals. In circumstances such as these, it may be desirable for an indicative charging transmitter to establish a longer transmission duration in response to multiple charge request signals. For example, inductive-charging transmitter may track how many charge requests are received over a period of time, and utilize the number of charge requests received to adjust the duration of inductive-charging signal transmissions after later charge requests, similar as described regarding FIG. 15. For example, if the inductive-charging transmitter receives 4 consecutive charge request signals after transmitting an inductive-charging signal with a 10 second duration 5 times, the inductive-charging transmitter may increase the duration of the inductive-charging signal to 50 seconds for future charge requests. In this manner, the inductive-charging receiver may send fewer charge request signals, receive more power in a shorter period of time, and/or the like.

FIG. 9A illustrates a timing diagram between an inductive-charging transmitter, an inductive-charging receiver, and a battery. The timing diagram of FIG. 9A comprises waveforms 902, 922, and 942. In the example of FIG. 9A, waveform 902 corresponds with a series of inductive-charging signal bursts from an inductive-charging receiver. It can be seen in the example of FIG. 9A that each inductive-charging signal burst in the initial set of bursts has a transmission duration approximately equal to transmission duration 904. It can be seen in the example of FIG. 9A that the final inductive-charging signal burst has a transmission duration 906, which is approximately equal to the combined transmission duration of the initial set of bursts. In the example of FIG. 9A, waveform 922 corresponds with a series of charge request signals. It can be seen that each charge request signal of waveform 922 occurs after termination of an inductive-charging signal burst in waveform 902.

In the example of FIG. 9A, it can be seen that final inductive-charging signal burst of waveform 902 is not immediately followed by a charge request signal on waveform 922. In this manner, an inductive-charging transmitter associated with waveform 902 may have established a longer transmission duration in response to the prior charge request signals. In this respect, the example of FIG. 9A may illustrate a timing diagram associated with a series of interactions between an inductive-charging transmitter and an inductive-charging receiver similar as described in FIG. 15.

In the example of FIG. 9A, waveform 942 corresponds with a power level of a battery. It can be seen that the power level of the battery rises during periods where waveform 902 indicates an inductive-charging signal burst is being transmitted, and that the power level of the battery falls and/or remains steady during periods where waveform 902 indicates an inductive-charging signal burst has terminated. It can also be seen that waveform 922 only indicates a charge request signal when the power level indicated on waveform 942 is below power level 946. Similarly, it can be seen that after the power level indicated on waveform 942 surpasses power level 946, waveform 922 no longer indicates a charge request until the power level reaches power level 944. In this manner, power level 946 may represent a battery charge termination threshold, and power level 944 may indicate battery charge request threshold.

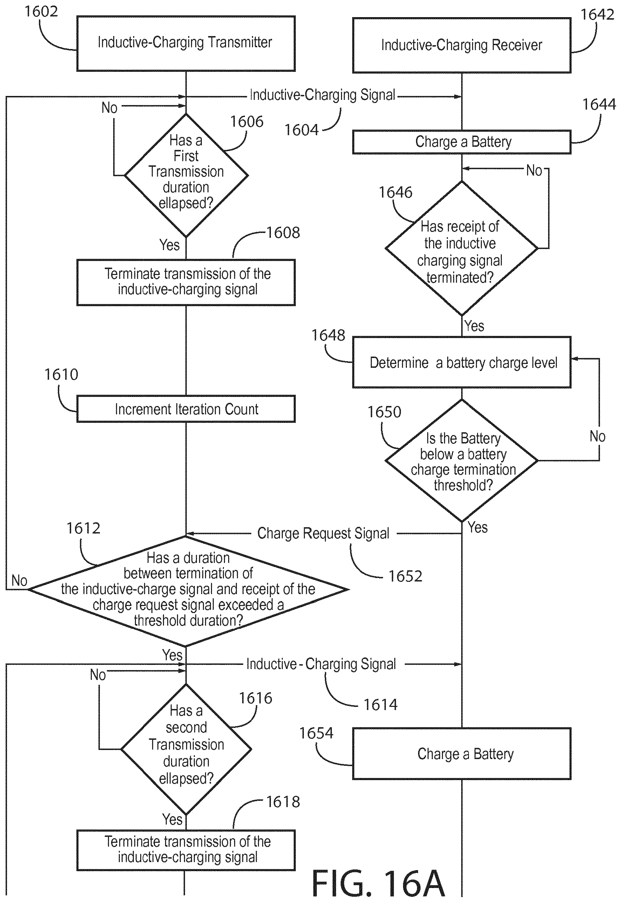

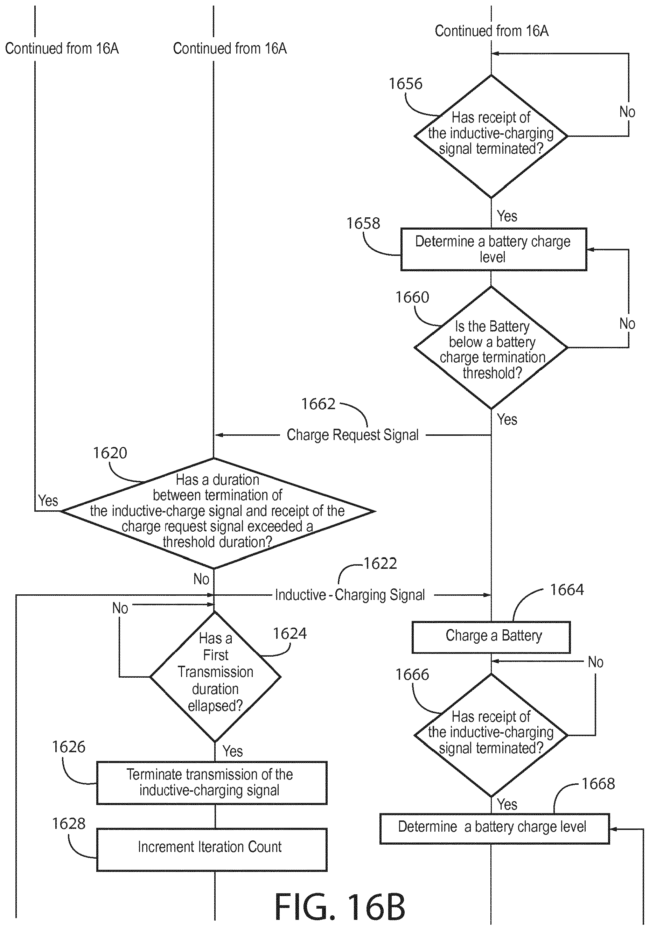

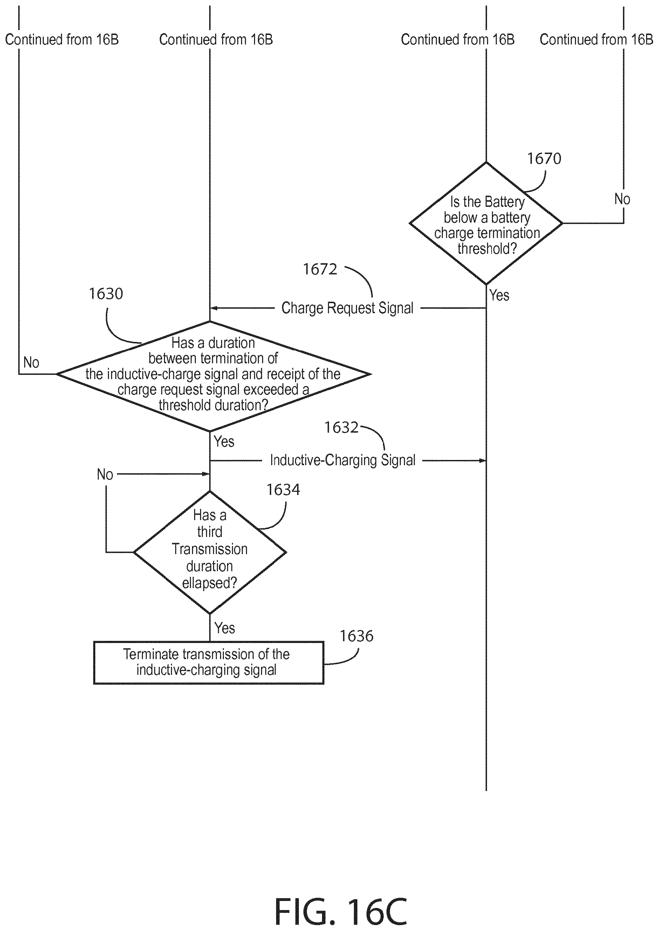

As previously described, in some circumstances, an inductive-charging transmitter may establish a longer transmission duration in response to multiple charge request signals. In some circumstances, the longer transmission duration may still be an insufficient duration to fully charge a power storage apparatus. For example, an initial series of charge request signals may have occurred when a power level was above a battery charge request threshold. In circumstances such as these, it may be desirable for the inductive-charging transmitter to further adjust the transmission duration similar as described regarding FIG. 16A-16C. For example, if the inductive-charging transmitter receives 3 consecutive charge request signals after transmitting an inductive-charging signal with a 50 second once, and transmitting an inductive charging signal with a 10 second duration 3 times, the inductive-charging transmitter may increase the duration of the inductive-charging signal to 80 seconds for future charge requests.

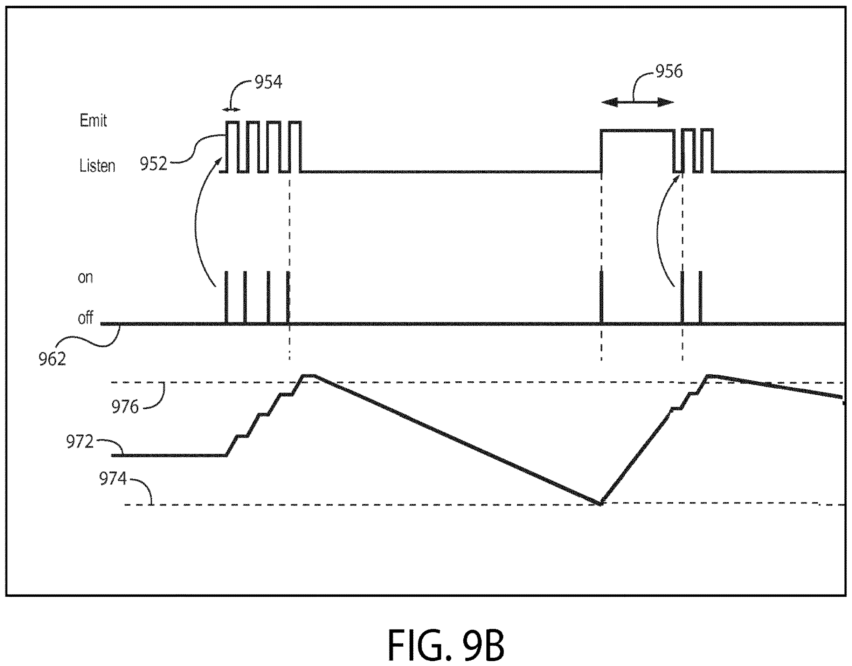

FIG. 9B illustrates a timing diagram between an inductive-charging transmitter, an inductive-charging receiver, and a battery. The timing diagram of FIG. 9B comprises waveforms 952, 962, and 972. In the example of FIG. 9B, waveform 972 corresponds with a series of inductive-charging signal bursts from an inductive-charging receiver. It can be seen in the example of FIG. 9B that each inductive-charging signal burst in the initial set of bursts has a transmission duration approximately equal to transmission duration 954. It can be seen in the example of FIG. 9B that the second set of inductive-charging signal bursts has a first burst with a transmission duration 956, which is approximately equal to the combined transmission duration of the initial set of bursts, and further bursts having a transmission duration approximately equal to transmission duration 954. In the example of FIG. 9B, waveform 962 corresponds with a series of charge request signals. It can be seen that each charge request signal of waveform 962 occurs after termination of an inductive-charging signal burst in waveform 952.

In the example of FIG. 9B, it can be seen that the initial inductive-charging signal burst of the second set of bursts of waveform 952 is not immediately followed by a charge request signal on waveform 962. In this manner, an inductive-charging transmitter associated with waveform 952 may have established a longer transmission duration in response to the prior charge request signals. It can be seen that additional charge requests follow the initial inductive-charging signal burst of the second set of bursts of waveform 952, which are in turn followed by the remaining bursts of waveform 952. In this respect, the example of FIG. 9B may illustrate a timing diagram associated with a series of interactions between an inductive-charging transmitter and an inductive-charging receiver similar as described in FIGS. 16A-16C.

In the example of FIG. 9B, waveform 972 corresponds with a power level of a battery. It can be seen that the power level of the battery rises during periods where waveform 952 indicates an inductive-charging signal burst is being transmitted, and that the power level of the battery falls during periods where waveform 952 indicates an inductive-charging signal burst has terminated. It can also be seen that waveform 962 only indicates a charge request signal when the power level indicated on waveform 972 is below power level 976. Similarly, it can be seen that after the power level indicated on waveform 972 surpasses power level 976, waveform 962 no longer indicates a charge request until the power level reaches power level 974. In this manner power level 976 may represent a battery charge termination threshold, and power level 974 may indicate battery charge request threshold.

FIG. 10 is a diagram illustrating operation of an inductive-charging system according to at least one example embodiment. The example of FIG. 10 is merely an example and does not limit the scope of the claims. For example, the inductive charging system may vary, the operation may vary, the apparatuses comprising the system may vary, and/or the like.

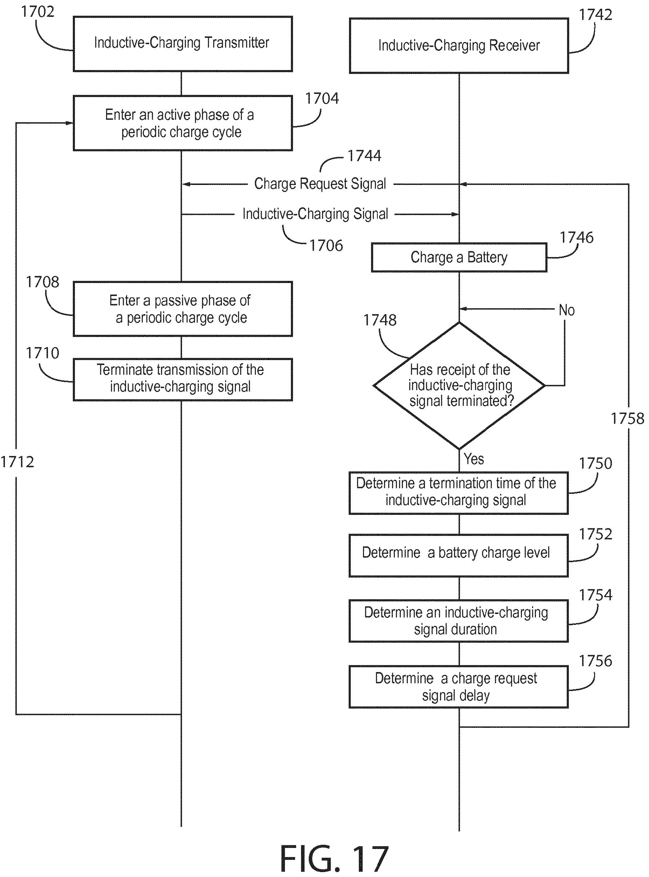

As previously described, in some circumstances, it may be desirable for an inductive-charging transmitter to comprise a simplified transmission system. For example, a simplified transmission system may reduce the size of the transmitter, may allow for the inductive-charging transmitter to be implemented with an extremely simple control system (e.g. comparator based rather than microprocessor based), and/or the like. For example, an inductive-charging transmitter may be configured to transmit during an active phase of a periodic charge cycle if a charge request signal is received. In such an example, the conductive-charging transmitter may be configured terminate transmission upon entering of a passive phase of the periodic charge cycle. In circumstances such as these, it may be desirable for an inductive-charging receiver to transmit a charge request signal at a particular point during the active phase of the periodic charge cycle. In this manner, the inductive-charging receiver may control the amount of power received during an active cycle. For example, if the inductive-charging receiver desires more power, it may be desirable for the inductive-charging receiver to transmit a charge request signal earlier in the active phase of the periodic charge cycle. In this manner, the inductive-charging receiver may receive more power during the remainder of the active phase. Similarly, if the inductive-charging receiver desires less power, it may be desirable for the inductive-charging receiver to transmit a charge request signal later in the active phase of the periodic charge cycle. In this manner, the inductive-charging receiver may receive less power during the remainder of the active phase. An inductive-charging receiver may determine when to transmit a charge request using interactions similar as described regarding FIGS. 17-18, and FIGS. 19A-19B. For example, the inductive-charging receiver may identify the length of a periodic charge cycle by tracking when an inductive-transmitter terminates transmission of an inductive-charging signal. Then the inductive-charging receiver may delay future charge requests based on the charge cycle period and the desired amount of power. For example, requesting power earlier in the period may allow for the inductive-charging transmitter to transmit longer, and the receiver may receive more power. In another example, requesting power later in the period may serve to reduce the time the inductive-charging transmitter may transmit, and the receiver may receive less power.

The example of FIG. 10 illustrates a timing diagram between an inductive-charging transmitter having a simplified transmission system, and an inductive-charging receiver. The timing diagram of FIG. 10 comprises waveforms 1002 and 1044. In the example of FIG. 10, waveform 1002 corresponds with a series of inductive-charging signal bursts from an inductive-charging receiver having a simplified transmission system. In the example of FIG.10, it should be understood that waveform 1002 corresponds with a periodic charge cycle having a fixed period of T1. In the example of FIG. 10, each fixed period T1 of the periodic charge cycle may comprise an active phase and an inactive phase. An active phase may refer to a portion of the charge cycle where the inductive-charging transmitter is transmitting. For example, during an active phase, the inductive-charging transmitter may emit an inductive-charging signal to an inductive-charging receiver. An inactive phase may refer to a portion of the charge cycle where the inductive-charging transmitter fails to be transmitting. For example, during an inactive phase, the inductive-charging transmitter may listen for a charge request signal from an inductive-charging receiver. In the example of FIG. 10, waveform 1044 corresponds with a series of charge request signals. It can be seen that each charge request signal of waveform 1044 occurs after termination of an inductive-charging signal burst in waveform 1002. It can be seen in the example of FIG. 10 that each inductive-charging signal burst has a transmission duration relating to the point during period T1 of the charge cycle when a charge request signal was transmitted. For example, it can be seen that the second inductive-charging signal burst has a transmission duration of T2 which is approximately equal to T1 - T3. Similarly it can be seen that the first and third inductive-charging signal bursts have a transmission duration longer than T2, and that the associated charge request signal was transmitted earlier during the respective fixed periods of T1. In this respect, the example of FIG. 10 may illustrate a timing diagram associated with a series of interactions between an inductive-charging transmitter and an inductive-charging receiver similar as described in FIG. 17, FIG. 18, and FIGS. 19A-19B.

FIG. 11 is an interaction diagram illustrating activities associated with operation of an inductive-charging system according to at least one example embodiment. In at least one example embodiment, there is a set of operations that corresponds with, at least some of, the activities of FIG. 11. For example, there may be a set of operations associated with activities of one or more apparatuses of FIG. 11. An apparatus, for example electronic apparatus 10 of FIG. 1, or a portion thereof, apparatus 201 of FIG. 2, or a portion thereof, or apparatus 211 of FIG. 2, or a portion thereof, apparatus 302 of FIG. 3, or a portion thereof, or apparatus 342 of FIG. 3 or a portion thereof, apparatus 502 of FIG. 5, or a portion thereof, or apparatus 542 of FIG. 3 or a portion thereof, apparatus 802 of FIG. 8A, or a portion thereof, or apparatus 842 of FIG. 8A or a portion thereof, apparatus 862 of FIG. 8B, or a portion thereof, or apparatus 882 of FIG. 8B or a portion thereof, and/or the like may utilize the set of operations. The apparatus may comprise means, including, for example processor 11 of FIG. 1, for performance of such operations. In an example embodiment, an apparatus, for example electronic apparatus 10 of FIG. 1, is transformed by having memory, for example memory 12 of FIG. 1, comprising computer code configured to, working with a processor, for example processor 11 of FIG. 1, cause the apparatus to perform the set of operations of FIG. 11.

As previously described, in some circumstances it may be desirable for an inductive-charging system to operate in a particular manner. FIG. 11 illustrates activities associated with communication between inductive-charging transmitter 1102 and inductive-charging receiver 1142. Inductive-charging transmitter 1102 and inductive-charging receiver 1142 may be similar as described regarding apparatus 10 of FIG. 1, apparatus 201 of FIG. 2, apparatus 211 of FIG. 2, apparatus 302 of FIG. 3, apparatus 342 of FIG. 3, apparatus 502 of FIG. 5, apparatus 542 of FIG. 5, apparatus 802 of FIG. 8A, or apparatus 842 of FIG. 8A, apparatus 862 of FIG. 8B, apparatus 882 of FIG. 8B or a portion thereof, and/or the like.

At interaction 1104, inductive-charging transmitter 1102 transmits an inductive charging signal to inductive-charging receiver 1142, and inductive-charging receiver 1142 receives the inductive charging signal from inductive-charging transmitter 1102. The transmission, the receipt, and the inductive-charging signal may be similar as described regarding FIG. 1, FIG. 2, FIG. 3, FIG. 4, FIG. 5, FIGS. 6A-6B, FIG. 7, FIGS. 8A-8B, FIGS. 9A-9B, and FIG. 10.

At interaction 1106, inductive-charging transmitter 1102 determines whether a transmission duration has elapsed. If inductive-charging transmitter 1102 determines that a transmission duration has failed to elapse, flow proceeds back to interaction 1106. If inductive-charging transmitter 1102 determines that a transmission duration has elapsed, flow proceeds to interaction 1108. The determination and the transmission duration may be similar as described regarding FIGS. 6A-6B, FIG. 7, FIGS. 9A-9B, and FIG. 10.

At interaction 1108, inductive-charging transmitter 1102 terminates transmission of the inductive charging signal. In at least one example embodiment, the termination is performed after elapse of a transmission duration. The termination may be similar as described regarding FIGS. 6A-6B, FIG. 7, FIGS. 9A-9B, and FIG. 10.

At interaction 1110, inductive-charging transmitter 1102 transmits the inductive charging signal to inductive-charging receiver 1142, and inductive-charging receiver 1142 receives the inductive charging signal from inductive-charging transmitter 1102 similarly as described regarding interaction 1104 of FIG. 11. In at least one example embodiment, the transmission is performed in response to receipt of a charge request signal.

At interaction 1112, inductive-charging transmitter 1102 determines whether another transmission duration has elapsed. If inductive-charging transmitter 1102 determines that another transmission duration has failed to elapse, flow proceeds back to interaction 1112. If inductive-charging transmitter 1102 determines that another transmission duration has elapsed, flow proceeds to interaction 1114. The determination and the transmission duration may be similar as described regarding FIGS. 6A-6B, FIG. 7, FIGS. 9A-9B, and FIG. 10.

At interaction 1114, inductive-charging transmitter 1102 terminates transmission of the inductive charging signal similarly as described regarding interaction 1108 of FIG. 11. In at least one example embodiment, the termination is performed after elapse of another transmission duration.

At interaction 1144, inductive-charging receiver 1142 charges a battery. In at least one example embodiment, the battery is charged by way of the inductive-charging signal. The charging and the battery may be similar as described regarding FIG. 1, FIG. 2, FIG. 3, FIG. 4, FIG. 5, FIGS. 6A-6B, FIG. 7, FIGS. 8A-8B, FIGS. 9A-9B, and FIG. 10.

At interaction 1146, inductive-charging receiver 1142 determines whether receipt of the inductive charging signal has terminated. If inductive-charging receiver 1142 determines that receipt of the inductive charging signal has failed to terminate, flow proceeds back to interaction 1146. If inductive-charging receiver 1142 determines that receipt of the inductive charging signal has terminated, flow proceeds to interaction 1148. The determination may be similar as described regarding FIGS. 6A-6B, FIG. 7, FIGS. 9A-9B, and FIG. 10.

At interaction 1148, inductive-charging receiver 1142 determines a battery charge level of the battery. In at least one example embodiment, the determination is performed in response to the termination of the receipt of the inductive-charging signal. The determination may be similar as described regarding FIG. 7, FIGS. 9A-9B, and FIG. 10.

At interaction 1150, inductive-charging receiver 1142 determines whether the battery is below a battery charge termination threshold. If inductive-charging receiver 1142 determines that the battery fails to be below a battery charge termination threshold, flow proceeds back to interaction 1148. If inductive-charging receiver 1142 determines that the battery is below a battery charge termination threshold, flow proceeds to interaction 1152. The determination may be similar as described regarding FIGS. 6A-6B, FIG. 7, FIGS. 9A-9B, and FIG. 10.

At interaction 1152, inductive-charging receiver 1142 transmits a charge request signal to inductive-charging transmitter 1102, and inductive-charging transmitter 1102 receives the charge request signal from inductive-charging receiver 1142. In at least one example embodiment, the transmission is performed in response to a determination that a battery charge level is below a battery charge termination threshold. In at least one example embodiment, the charge request signal is received subsequent to termination of the transmission of the inductive-charging signal. The transmission, the receipt, and the charge request signal may be similar as described regarding FIG. 1, FIG. 2, FIG. 3, FIG. 4, FIG. 5, FIGS. 6A-6B, FIG. 7, FIGS. 8A-8B, FIGS. 9A-9B, and FIG. 10.

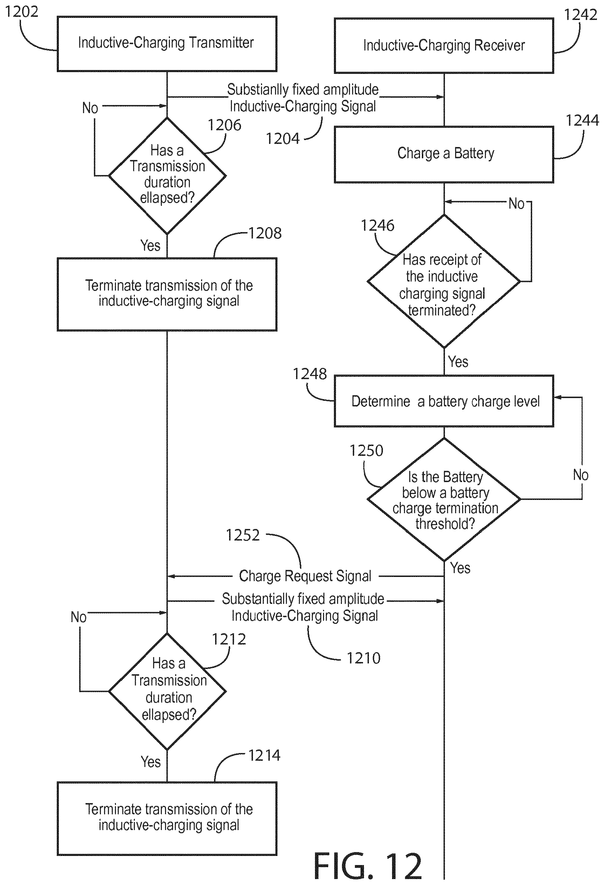

FIG. 12 is an interaction diagram illustrating activities associated with operation of an inductive-charging system according to at least one example embodiment. In at least one example embodiment, there is a set of operations that corresponds with, at least some of, the activities of FIG. 12. For example, there may be a set of operations associated with activities of one or more apparatuses of FIG. 12. An apparatus, for example electronic apparatus 10 of FIG. 1, or a portion thereof, apparatus 201 of FIG. 2, or a portion thereof, or apparatus 211 of FIG. 2, or a portion thereof, apparatus 302 of FIG. 3, or a portion thereof, or apparatus 342 of FIG. 3 or a portion thereof, apparatus 502 of FIG. 5, or a portion thereof, or apparatus 542 of FIG. 5 or a portion thereof, apparatus 802 of FIG. 8A, or a portion thereof, or apparatus 842 of FIG. 8A or a portion thereof, apparatus 862 of FIG. 8B, or a portion thereof, or apparatus 882 of FIG. 8B or a portion thereof, and/or the like may utilize the set of operations. The apparatus may comprise means, including, for example processor 11 of FIG. 1, for performance of such operations. In an example embodiment, an apparatus, for example electronic apparatus 10 of FIG. 1, is transformed by having memory, for example memory 12 of FIG. 1, comprising computer code configured to, working with a processor, for example processor 11 of FIG. 1, cause the apparatus to perform the set of operations of FIG. 12.

As previously described, in some circumstances it may be desirable for an inductive-charging signal to have a substantially fixed amplitude. FIG. 12 illustrates activities associated with communication between inductive-charging transmitter 1202 and inductive-charging receiver 1242. Inductive-charging transmitter 1202 and inductive-charging receiver 1242 may be similar as described regarding apparatus 10 of FIG. 1, apparatus 201 of FIG. 2, apparatus 211 of FIG. 2, apparatus 302 of FIG. 3, apparatus 342 of FIG. 3, apparatus 502 of FIG. 5, apparatus 542 of FIG. 5, apparatus 802 of FIG. 8A, or apparatus 842 of FIG. 8A, apparatus 862 of FIG. 8B, apparatus 882 of FIG. 8B or a portion thereof, and/or the like.

At interaction 1204, inductive-charging transmitter 1202 transmits a substantially fixed amplitude inductive charging signal to inductive-charging receiver 1242, and inductive-charging receiver 1242 receives the substantially fixed amplitude inductive charging signal from inductive-charging transmitter 1202. In at least one example embodiment, the substantially fixed amplitude inductive charging signal has a frequency corresponding to a resonant frequency of the inductive-charging receive. The transmission, the receipt, and the substantially fixed amplitude inductive-charging signal may be similar as described regarding FIG. 1, FIG. 2, FIG. 3, FIG. 4, FIG. 5, FIGS. 6A-6B, FIG. 7, FIGS. 8A-8B, FIGS. 9A-9B, and FIG. 10.

At interaction 1206, inductive-charging transmitter 1202 determines whether a transmission duration has elapsed, similarly as described regarding interaction 1106 of FIG. 11. If inductive-charging transmitter 1202 determines that a transmission duration has failed to elapse, flow proceeds back to interaction 1206. If inductive-charging transmitter 1202 determines that a transmission duration has elapsed, flow proceeds to interaction 1208.

At interaction 1208, inductive-charging transmitter 1202 terminates transmission of the inductive charging signal, similarly as described regarding interaction 1108 of FIG. 11.

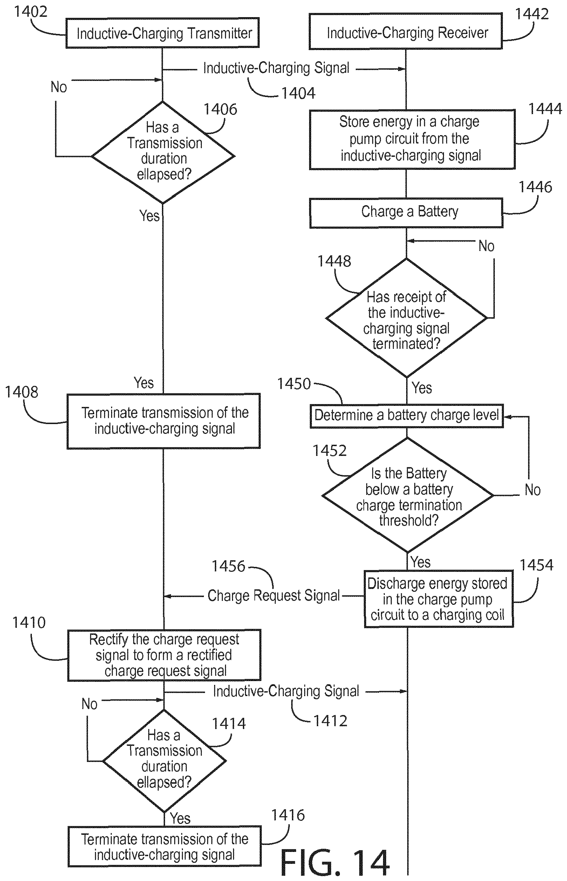

At interaction 1210, inductive-charging transmitter 1202 transmits the substantially fixed amplitude inductive charging signal to inductive-charging receiver 1242, and inductive-charging receiver 1242 receives the substantially fixed amplitude inductive charging signal from inductive-charging transmitter 1202, similarly as described regarding interaction 1204 of FIG. 14. In at least one example embodiment, the transmission is performed in response to receipt of a charge request signal.

At interaction 1212, inductive-charging transmitter 1202 determines whether another transmission duration has elapsed, similarly as described regarding interaction 1112 of FIG. 11. If inductive-charging transmitter 1202 determines that another transmission duration has failed to elapse, flow proceeds back to interaction 1212. If inductive-charging transmitter 1202 determines that another transmission duration has elapsed, flow proceeds to interaction 1214.

At interaction 1214, inductive-charging transmitter 1202 terminates transmission of the inductive charging signal similarly as described regarding interaction 1208 of FIG. 12. In at least one example embodiment, the termination is performed after elapse of another transmission duration.

At interaction 1244, inductive-charging receiver 1242 charges a battery, similarly as described regarding interaction 1144 of FIG. 11. In at least one example embodiment, the battery is charged by way of the substantially fixed amplitude inductive-charging signal.

At interaction 1246, inductive-charging receiver 1242 determines whether receipt of the substantially fixed amplitude inductive charging signal has terminated. If inductive-charging receiver 1242 determines that receipt of the inductive charging signal has failed to terminate, flow proceeds back to interaction 1246. If inductive-charging receiver 1242 determines that receipt of the inductive charging signal has terminated, flow proceeds to interaction 1248. The determination may be similar as described regarding FIGS. 6A-6B, FIG. 7, FIGS. 9A-9B, and FIG. 10.

At interaction 1248, inductive-charging receiver 1242 determines a battery charge level of the battery, similarly as described regarding interaction 1148 of FIG. 11. In at least one example embodiment, the determination is performed in response to the termination of the receipt of the substantially fixed amplitude inductive-charging signal.

At interaction 1250, inductive-charging receiver 1242 determines whether the battery is below a battery charge termination threshold, similarly as described regarding interaction 1150 of FIG. 11. If inductive-charging receiver 1242 determines that the battery fails to be below a battery charge termination threshold, flow proceeds back to interaction 1248. If inductive-charging receiver 1242 determines that the battery is below a battery charge termination threshold, flow proceeds to interaction 1252.

At interaction 1252, inductive-charging receiver 1242 transmits a charge request signal to inductive-charging transmitter 1202, and inductive-charging transmitter 1202 receives the charge request signal from inductive-charging receiver 1242, similarly as described regarding interaction 1152 of FIG. 11. In at least one example embodiment, the transmission is performed in response to a determination that a battery charge level is below a battery charge termination threshold. In at least one example embodiment, the charge request signal is received subsequent to termination of the transmission of the substantially fixed amplitude inductive-charging signal.

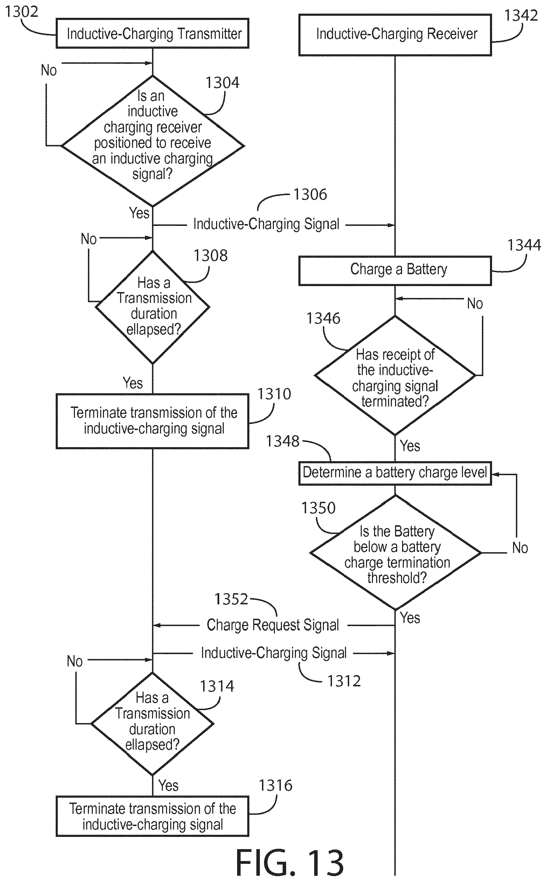

FIG. 13 is an interaction diagram illustrating activities associated with operation of an inductive-charging system according to at least one example embodiment. In at least one example embodiment, there is a set of operations that corresponds with, at least some of, the activities of FIG. 13. For example, there may be a set of operations associated with activities of one or more apparatuses of FIG. 13. An apparatus, for example electronic apparatus 10 of FIG. 1, or a portion thereof, apparatus 201 of FIG. 2, or a portion thereof, or apparatus 211 of FIG. 2, or a portion thereof, apparatus 302 of FIG. 3, or a portion thereof, or apparatus 342 of FIG. 3 or a portion thereof, apparatus 502 of FIG. 5, or a portion thereof, or apparatus 542 of FIG. 5 or a portion thereof, apparatus 802 of FIG. 8A, or a portion thereof, or apparatus 842 of FIG. 8A or a portion thereof, apparatus 862 of FIG. 8B, or a portion thereof, or apparatus 882 of FIG. 8B or a portion thereof, and/or the like may utilize the set of operations. The apparatus may comprise means, including, for example processor 11 of FIG. 1, for performance of such operations. In an example embodiment, an apparatus, for example electronic apparatus 10 of FIG. 1, is transformed by having memory, for example memory 12 of FIG. 1, comprising computer code configured to, working with a processor, for example processor 11 of FIG. 1, cause the apparatus to perform the set of operations of FIG. 13.

In some circumstances, it may be desirable to limit transmission of an inductive-charging signal to circumstances where an inductive-charging receiver is positioned to receive the inductive charging signal. For example, transmitting an inductive-charging signal to circumstances where an inductive-charging receiver fails to be positioned to receive the inductive charging signal may waste power, cause undesirable power feedback into the transmitter, and/or the like. In circumstances such as these, it may be desirable to determine that the inductive-charging receiver is positioned to receive the inductive charging signal. In this manner, the transmission of the inductive-charging signal may be performed in response to the determination that the inductive-charging receiver is positioned to receive the inductive charging signal. For example, the inductive-charging transmitter may comprise a proximity sensor, a switch, a magnetic sensor for detecting a permanent magnet attached to an inductive-charging receiver, and/or the like that indicates when an inductive-charging receiver is positioned to receive the inductive charging signal.

FIG. 13 illustrates activities associated with communication between inductive-charging transmitter 1302 and inductive-charging receiver 1342. Inductive-charging transmitter 1302 and inductive-charging receiver 1342 may be similar as described regarding apparatus 10 of FIG. 1, apparatus 201 of FIG. 2, apparatus 211 of FIG. 2, apparatus 302 of FIG. 3, apparatus 342 of FIG. 3, apparatus 502 of FIG. 5, apparatus 542 of FIG. 5, apparatus 802 of FIG. 8A, or apparatus 842 of FIG. 8A, apparatus 862 of FIG. 8B, apparatus 882 of FIG. 8B or a portion thereof, and/or the like.

At interaction 1304, inductive-charging transmitter 1302 determines whether an inductive-charging receiver is positioned to receive an inductive charging signal. If inductive-charging transmitter 1302 determines that an inductive-charging receiver fails to be positioned to receive the inductive charging signal, flow proceeds back to interaction 1304. If inductive-charging transmitter 1302 determines that an inductive-charging receiver is positioned to receive the inductive charging signal, flow proceeds to interaction 1306.

At interaction 1306, inductive-charging transmitter 1302 transmits an inductive charging signal to inductive-charging receiver 1342, and inductive-charging receiver 1342 receives the inductive charging signal from inductive-charging transmitter 1302, similarly as described regarding interaction 1104 of FIG. 11. At interaction 1308, inductive-charging transmitter 1302 determines whether a transmission duration has elapsed, similarly as described regarding interaction 1106 of FIG. 11. If inductive-charging transmitter 1302 determines that a transmission duration has failed to elapse, flow proceeds back to interaction 1308. If inductive-charging transmitter 1302 determines that a transmission duration has elapsed, flow proceeds to interaction 1310.

At interaction 1310, inductive-charging transmitter 1302 terminates transmission of the inductive charging signal, similarly as described regarding interaction 1108 of FIG. 11. At interaction 1312, inductive-charging transmitter 1302 transmits the inductive charging signal to inductive-charging receiver 1342, and inductive-charging receiver 1342 receives the inductive charging signal from inductive-charging transmitter 1302, similarly as described regarding interaction 1104 of FIG. 11. In at least one example embodiment, the transmission is performed in response to receipt of a charge request signal.

At interaction 1314, inductive-charging transmitter 1302 determines whether another transmission duration has elapsed, similarly as described regarding interaction 1112 of FIG. 11. If inductive-charging transmitter 1302 determines that another transmission duration has failed to elapse, flow proceeds back to interaction 1314. If inductive-charging transmitter 1302 determines that another transmission duration has elapsed, flow proceeds to interaction 1316.

At interaction 1316, inductive-charging transmitter 1302 terminates transmission of the inductive charging signal, similarly as described regarding interaction 1108 of FIG. 11. In at least one example embodiment, the termination is performed after elapse of another transmission duration.

At interaction 1344, inductive-charging receiver 1342 charges a battery, similarly as described regarding interaction 1144 of FIG. 11. In at least one example embodiment, the battery is charged by way of the inductive-charging signal.

At interaction 1346, inductive-charging receiver 1342 determines whether receipt of the inductive charging signal has terminated, similarly as described regarding interaction 1146 of FIG. 11. If inductive-charging receiver 1342 determines that receipt of the inductive charging signal has failed to terminate, flow proceeds back to interaction 1346. If inductive-charging receiver 1342 determines that receipt of the inductive charging signal has terminated, flow proceeds to interaction 1348.

At interaction 1348, inductive-charging receiver 1342 determines a battery charge level of the battery, similarly as described regarding interaction 1148 of FIG. 11. In at least one example embodiment, the determination is performed in response to the termination of the receipt of the inductive-charging signal.

At interaction 1350, inductive-charging receiver 1342 determines whether the battery is below a battery charge termination threshold, similarly as described regarding interaction 1150 of FIG. 11. If inductive-charging receiver 1342 determines that the battery fails to be below a battery charge termination threshold, flow proceeds back to interaction 1348. If inductive-charging receiver 1342 determines that the battery is below a battery charge termination threshold, flow proceeds to interaction 1352.

At interaction 1352, inductive-charging receiver 1342 transmits a charge request signal to inductive-charging transmitter 1302, and inductive-charging transmitter 1302 receives the charge request signal from inductive-charging receiver 1342, similarly as described regarding interaction 1152 of FIG. 11. In at least one example embodiment, the transmission is performed in response to a determination that a battery charge level is below a battery charge termination threshold. In at least one example embodiment, the charge request signal is received subsequent to termination of the transmission of the inductive-charging signal.

FIG. 14 is an interaction diagram illustrating activities associated with operation of an inductive-charging system according to at least one example embodiment. In at least one example embodiment, there is a set of operations that corresponds with, at least some of, the activities of FIG. 14. For example, there may be a set of operations associated with activities of one or more apparatuses of FIG. 14. An apparatus, for example electronic apparatus 10 of FIG. 1, or a portion thereof, apparatus 201 of FIG. 2, or a portion thereof, or apparatus 211 of FIG. 2, or a portion thereof, apparatus 302 of FIG. 3, or a portion thereof, or apparatus 342 of FIG. 3 or a portion thereof, apparatus 502 of FIG. 5, or a portion thereof, or apparatus 542 of FIG. 5 or a portion thereof, apparatus 802 of FIG. 8A, or a portion thereof, or apparatus 842 of FIG. 8A or a portion thereof, apparatus 862 of FIG. 8B, or a portion thereof, or apparatus 882 of FIG. 8B or a portion thereof, and/or the like may utilize the set of operations. The apparatus may comprise means, including, for example processor 11 of FIG. 1, for performance of such operations. In an example embodiment, an apparatus, for example electronic apparatus 10 of FIG. 1, is transformed by having memory, for example memory 12 of FIG. 1, comprising computer code configured to, working with a processor, for example processor 11 of FIG. 1, cause the apparatus to perform the set of operations of FIG. 14.

As previously described, in some circumstances an inductive-charging transmitter may rectify a charge request signal. FIG. 14 illustrates activities associated with communication between inductive-charging transmitter 1402 and inductive-charging receiver 1442. Inductive-charging transmitter 1402 and inductive-charging receiver 1442 may be similar as described regarding apparatus 10 of FIG. 1, apparatus 201 of FIG. 2, apparatus 211 of FIG. 2, apparatus 302 of FIG. 3, apparatus 342 of FIG. 3, apparatus 502 of FIG. 5, apparatus 542 of FIG. 5, apparatus 802 of FIG. 8A, or apparatus 842 of FIG. 8A, apparatus 862 of FIG. 8B, apparatus 882 of FIG. 8B or a portion thereof, and/or the like.

At interaction 1404, inductive-charging transmitter 1402 transmits an inductive charging signal to inductive-charging receiver 1442, and inductive-charging receiver 1442 receives the inductive charging signal from inductive-charging transmitter 1402, similarly as described regarding interaction 1104 of FIG. 11. At interaction 1406, inductive-charging transmitter 1402 determines whether a transmission duration has elapsed, similarly as described regarding interaction 1106 of FIG. 11. If inductive-charging transmitter 1402 determines that a transmission duration has failed to elapse, flow proceeds back to interaction 1406. If inductive-charging transmitter 1402 determines that a transmission duration has elapsed, flow proceeds to interaction 1408. At interaction 1408, inductive-charging transmitter 1402 terminates transmission of the inductive charging signal, similarly as described regarding interaction 1108 of FIG. 11.

At interaction 1410, inductive-charging transmitter 1402 rectifies a charge request signal to form a rectified charge request signal. The rectification and the rectified charge request signal may be similar as described regarding FIGS. 6A-6B and FIGS. 8A-8B.

At interaction 1412, inductive-charging transmitter 1402 transmits the inductive charging signal to inductive-charging receiver 1442, and inductive-charging receiver 1442 receives the inductive charging signal from inductive-charging transmitter 1402, similarly as described regarding interaction 1104 of FIG. 11. In at least one example embodiment, the transmission is performed in response to the rectified charge request signal.

At interaction 1414, inductive-charging transmitter 1402 determines whether another transmission duration has elapsed, similarly as described regarding interaction 1112 of FIG. 11. If inductive-charging transmitter 1402 determines that another transmission duration has failed to elapse, flow proceeds back to interaction 1414. If inductive-charging transmitter 1302 determines that another transmission duration has elapsed, flow proceeds to interaction 1416.

At interaction 1416, inductive-charging transmitter 1402 terminates transmission of the inductive charging signal, similarly as described regarding interaction 1108 of FIG. 11. In at least one example embodiment, the termination is performed after elapse of another transmission duration.

At interaction 1444, inductive-charging receiver 1442 stores energy in a charge pump circuit from the inductive-charging signal. The energy storage and the charge pump circuit may be similar as described regarding FIGS. 8A-8B.

At interaction 1446, inductive-charging receiver 1442 charges a battery, similarly as described regarding interaction 1144 of FIG. 11. In at least one example embodiment, the battery is charged by way of the inductive-charging signal.

At interaction 1448, inductive-charging receiver 1442 determines whether receipt of the inductive charging signal has terminated, similarly as described regarding interaction 1146 of FIG. 11. If inductive-charging receiver 1442 determines that receipt of the inductive charging signal has failed to terminate, flow proceeds back to interaction 1448. If inductive-charging receiver 1442 determines that receipt of the inductive charging signal has terminated, flow proceeds to interaction 1450.

At interaction 1450, inductive-charging receiver 1442 determines a battery charge level of the battery, similarly as described regarding interaction 1148 of FIG. 11. In at least one example embodiment, the determination is performed in response to the termination of the receipt of the inductive-charging signal.

At interaction 1452, inductive-charging receiver 1442 determines whether the battery is below a battery charge termination threshold, similarly as described regarding interaction 1150 of FIG. 11. If inductive-charging receiver 1442 determines that the battery fails to be below a battery charge termination threshold, flow proceeds back to interaction 1450. If inductive-charging receiver 1442 determines that the battery is below a battery charge termination threshold, flow proceeds to interaction 1454.

At interaction 1454, inductive-charging receiver 1442 discharges energy stored in the charge pump circuit to a charging coil. The discharge and the charging coil may be similar as described regarding FIG. 2, FIG. 3, FIG. 4, FIG. 5, FIGS. 6A-6B, FIG. 7, FIGS. 8A-8B, FIGS. 9A-9B, and FIG. 10.

At interaction 1456, inductive-charging receiver 1442 transmits a charge request signal to inductive-charging transmitter 1402, and inductive-charging transmitter 1402 receives the charge request signal from inductive-charging receiver 1442, similarly as described regarding interaction 1152 of FIG. 11. In at least one example embodiment, the transmission comprises discharge of at least a portion of the energy stored in the charge pump circuit. In at least one example embodiment, the transmission is performed in response to a determination that a battery charge level is below a battery charge termination threshold. In at least one example embodiment, the charge request signal is received subsequent to termination of the transmission of the inductive-charging signal.

FIG. 15 is an interaction diagram illustrating activities associated with operation of an inductive-charging system according to at least one example embodiment. In at least one example embodiment, there is a set of operations that corresponds with, at least some of, the activities of FIG. 15. For example, there may be a set of operations associated with activities of one or more apparatuses of FIG. 15. An apparatus, for example electronic apparatus 10 of FIG. 1, or a portion thereof, apparatus 201 of FIG. 2, or a portion thereof, or apparatus 211 of FIG. 2, or a portion thereof, apparatus 302 of FIG. 3, or a portion thereof, or apparatus 342 of FIG. 3 or a portion thereof, apparatus 502 of FIG. 5, or a portion thereof, or apparatus 542 of FIG. 5 or a portion thereof, apparatus 802 of FIG. 8A, or a portion thereof, or apparatus 842 of FIG. 8A or a portion thereof, apparatus 862 of FIG. 8B, or a portion thereof, or apparatus 882 of FIG. 8B or a portion thereof, and/or the like may utilize the set of operations. The apparatus may comprise means, including, for example processor 11 of FIG. 1, for performance of such operations. In an example embodiment, an apparatus, for example electronic apparatus 10 of FIG. 1, is transformed by having memory, for example memory 12 of FIG. 1, comprising computer code configured to, working with a processor, for example processor 11 of FIG. 1, cause the apparatus to perform the set of operations of FIG. 15.

In some circumstances, it may be desirable for a user of an electronic apparatus to utilize a separate inductive-charging transceiver. For example, an inductive-charging transceiver may serve as a portable wireless charging source for a device such as a mobile telephone. An inductive-charging transceiver may refer to an inductive-charging apparatus that may receive an inductive-charging signal from a separate inductive-charging transmitter, store the power received by the inductive-charging transmitter by way of a power storage apparatus, and utilize the stored power to transmit an inductive-charging signal to a separate inductive-charging receiver. For instance, a user of the mobile telephone may charge the inductive-charging transceiver at home, and charge his mobile telephone by way of the inductive-charging transceiver while away from home when a conventional charging system is unavailable, inconvenient, and/or the like. In another example, an inductive-charging transceiver may serve as an emergency power source when grid or vehicle based power is unavailable, such as in a power outage, a car battery failure, and/or the like. In some circumstances it may be desirable for an inductive-charging transceiver to utilize a simplified communications system. Such a simplified communications system may reduce the complexity, cost, size, and/or the like of the inductive-charging transceiver. For example, an inductive-charging receiver may be combined with an inductive-charging transmitter to form an inductive-charging transceiver, similar as described regarding inductive-charging transceiver 1942 of FIGS. 19A-19B. By utilizing a simplified communications system, the inductive-charging receiver may be able to share components with the inducting-charging transmitter, operate on less power, have a smaller footprint, and/or the like.

As previously described, in some circumstances a simplified communication system, such as may be utilized by an inductive-charging receiver, an inductive charging transceiver, and/or the like, may cause the inductive-charging receiver, inductive charging transceiver, and/or the like, to send multiple charge request signals. In circumstances such as these, it may be desirable to optimize the inductive-charging transmitter for the simplified communications system. FIG. 15 illustrates activities associated with communication between inductive-charging transmitter 1502 and inductive-charging receiver 1542. Inductive-charging transmitter 1502 and inductive-charging receiver 1542 may be similar as described regarding apparatus 10 of FIG. 1, apparatus 201 of FIG. 2, apparatus 211 of FIG. 2, apparatus 302 of FIG. 3, apparatus 342 of FIG. 3, apparatus 502 of FIG. 5, apparatus 542 of FIG. 5, apparatus 802 of FIG. 8A, or apparatus 842 of FIG. 8A, apparatus 862 of FIG. 8B, apparatus 882 of FIG. 8B or a portion thereof, and/or the like.

At interaction 1504, inductive-charging transmitter 1502 transmits an inductive charging signal to inductive-charging receiver 1542, and inductive-charging receiver 1542 receives the inductive charging signal from inductive-charging transmitter 1502, similarly as described regarding interaction 1104 of FIG. 11. At interaction 1506, inductive-charging transmitter 1502 determines whether a first transmission duration has elapsed, similarly as described regarding interaction 1106 of FIG. 11. If inductive-charging transmitter 1502 determines that the first transmission duration has failed to elapse, flow proceeds back to interaction 1506. If inductive-charging transmitter 1502 determines that the first transmission duration has elapsed, flow proceeds to interaction 1508. The first transmission duration may be similar as described regarding FIG. 7, and FIGS. 9A-9B.

At interaction 1508, inductive-charging transmitter 1502 terminates transmission of the inductive charging signal, similarly as described regarding interaction 1108 of FIG. 11. At interaction 1510, inductive-charging transmitter 1502 increments an iteration count. The incrementing and the iteration count may be similar as described regarding FIGS. 9A-9B.

At interaction 1512, inductive-charging transmitter 1502 determines whether a duration between termination of the inductive charge signal and receipt of a charge request signal exceeded a threshold duration. If inductive-charging transmitter 1502 determines that the duration between termination of the inductive charge signal and receipt of a charge request signal failed to exceed a threshold duration, flow proceeds back to interaction 1504. If inductive-charging transmitter 1502 determines that a duration between termination of the inductive charge signal and receipt of a charge request signal exceeded a threshold duration, flow proceeds to interaction 1516. The duration and the threshold duration may be similar as described regarding FIGS. 9A-9B.

At interaction 1514, inductive-charging transmitter 1502 transmits an inductive charging signal to inductive-charging receiver 1542, and inductive-charging receiver 1542 receives the inductive charging signal from inductive-charging transmitter 1502, similarly as described regarding interaction 1104 of FIG. 11. In at least one example embodiment, the transmission is performed in response to receipt of a charge request signal.

At interaction 1516, inductive-charging transmitter 1502 determines whether a second transmission duration has elapsed, similarly as described regarding interaction 1106 of FIG. 11. If inductive-charging transmitter 1502 determines that a second transmission duration has failed to elapse, flow proceeds back to interaction 1516. If inductive-charging transmitter 1502 determines that a second transmission duration has elapsed, flow proceeds to interaction 1518. The second transmission duration may be similar as described regarding FIGS. 9A-9B. In at least one example embodiment, the second transmission duration is the iteration number multiplied by the first transmission duration. In at least one example embodiment, the second transmission duration is an overcharge guard duration less than the iteration number multiplied by the first transmission duration. An overcharge guard duration may refer to a transmission duration less than a duration that may overcharge a power storage apparatus. In at least one example embodiment, the overcharge guard duration is an overcharge guard number multiplied by the first transmission duration.

At interaction 1518, inductive-charging transmitter 1502 terminates transmission of the inductive charging signal, similarly as described regarding interaction 1108 of FIG. 11. In at least one example embodiment, the termination is performed after elapse of the second transmission duration.

At interaction 1544, inductive-charging receiver 1542 charges a battery, similarly as described regarding interaction 1144 of FIG. 11. In at least one example embodiment, the battery is charged by way of the inductive-charging signal.

At interaction 1546, inductive-charging receiver 1542 determines whether receipt of the inductive charging signal has terminated, similarly as described regarding interaction 1146 of FIG. 11. If inductive-charging receiver 1542 determines that receipt of the inductive charging signal has failed to terminate, flow proceeds back to interaction 1546. If inductive-charging receiver 1542 determines that receipt of the inductive charging signal has terminated, flow proceeds to interaction 1548.

At interaction 1548, inductive-charging receiver 1542 determines a battery charge level of the battery, similarly as described regarding interaction 1148 of FIG. 11. In at least one example embodiment, the determination is performed in response to the termination of the receipt of the inductive-charging signal.

At interaction 1550, inductive-charging receiver 1542 determines whether the battery is below a battery charge termination threshold, similarly as described regarding interaction 1150 of FIG. 11. If inductive-charging receiver 1542 determines that the battery fails to be below a battery charge termination threshold, flow proceeds back to interaction 1548. If inductive-charging receiver 1542 determines that the battery is below a battery charge termination threshold, flow proceeds to interaction 1552.

At interaction 1552, inductive-charging receiver 1542 transmits a charge request signal to inductive-charging transmitter 1502, and inductive-charging transmitter 1502 receives the charge request signal from inductive-charging receiver 1542, similarly as described regarding interaction 1152 of FIG. 11. In at least one example embodiment, the transmission is performed in response to a determination that a battery charge level is below a battery charge termination threshold. In at least one example embodiment, the charge request signal is received subsequent to termination of the transmission of the inductive-charging signal.

FIGS. 16A-16C are an interaction diagram illustrating activities associated with operation of an inductive-charging system according to at least one example embodiment. In at least one example embodiment, there is a set of operations that corresponds with, at least some of, the activities of FIGS. 16A-16C. For example, there may be a set of operations associated with activities of one or more apparatuses of FIGS. 16A-16C. An apparatus, for example electronic apparatus 10 of FIG. 1, or a portion thereof, apparatus 201 of FIG. 2, or a portion thereof, or apparatus 211 of FIG. 2, or a portion thereof, apparatus 302 of FIG. 3, or a portion thereof, or apparatus 342 of FIG. 3 or a portion thereof, apparatus 502 of FIG. 5, or a portion thereof, or apparatus 542 of FIG. 5 or a portion thereof, apparatus 802 of FIG. 8A, or a portion thereof, or apparatus 842 of FIG. 8A or a portion thereof, apparatus 862 of FIG. 8B, or a portion thereof, or apparatus 882 of FIG. 8B or a portion thereof, and/or the like may utilize the set of operations. The apparatus may comprise means, including, for example processor 11 of FIG. 1, for performance of such operations. In an example embodiment, an apparatus, for example electronic apparatus 10 of FIG. 1, is transformed by having memory, for example memory 12 of FIG. 1, comprising computer code configured to, working with a processor, for example processor 11 of FIG. 1, cause the apparatus to perform the set of operations of FIGS. 16A-16C.

As previously described, in some circumstances a simplified communications system, such as may be utilized by an inductive-charging receiver, an inductive charging transceiver, and/or the like, may cause the inductive-charging receiver, inductive charging transceiver, and/or the like, to send multiple charge request signals. As previously described, in circumstances such as these, it may be desirable to optimize the inductive-charging transmitter for the simplified communications system. FIGS. 16A-16C illustrate activities associated with communication between inductive-charging transmitter 1602 and inductive-charging receiver 1642. Inductive-charging transmitter 1602 and inductive-charging receiver 1642 may be similar as described regarding apparatus 10 of FIG. 1, apparatus 201 of FIG. 2, apparatus 211 of FIG. 2, apparatus 302 of FIG. 3, apparatus 342 of FIG. 3, apparatus 502 of FIG. 5, apparatus 542 of FIG. 5, apparatus 802 of FIG. 8A, or apparatus 842 of FIG. 8A, apparatus 862 of FIG. 8B, apparatus 882 of FIG. 8B or a portion thereof, and/or the like.

At interaction 1604, inductive-charging transmitter 1602 transmits an inductive charging signal to inductive-charging receiver 1642, and inductive-charging receiver 1642 receives the inductive charging signal from inductive-charging transmitter 1602, similarly as described regarding interaction 1104 of FIG. 11. At interaction 1606, inductive-charging transmitter 1602 determines whether a first transmission duration has elapsed, similarly as described regarding interaction 1106 of FIG. 11. If inductive-charging transmitter 1602 determines that the first transmission duration has failed to elapse, flow proceeds back to interaction 1606. If inductive-charging transmitter 1602 determines that the first transmission duration has elapsed, flow proceeds to interaction 1608. The first transmission duration may be similar as described regarding FIG. 7 and FIGS. 9A-9B.

At interaction 1608, inductive-charging transmitter 1602 terminates transmission of the inductive charging signal, similarly as described regarding interaction 1108 of FIG. 11. At interaction 1610, inductive-charging transmitter 1602 increments an iteration count. The incrementing and the iteration count may be similar as described regarding FIGS. 9A-9B.

At interaction 1612, inductive-charging transmitter 1602 determines whether a duration between termination of the inductive charge signal and receipt of a charge request signal exceeded a threshold duration. If inductive-charging transmitter 1602 determines that the duration between termination of the inductive charge signal and receipt of a charge request signal failed to exceed a threshold duration, flow proceeds back to interaction 1604. If inductive-charging transmitter 1602 determines that a duration between termination of the inductive charge signal and receipt of a charge request signal exceeded a threshold duration, flow proceeds to interaction 1616. The duration and the threshold duration may be similar as described regarding FIGS. 9A-9B.

At interaction 1614, inductive-charging transmitter 1602 transmits the inductive charging signal to inductive-charging receiver 1642, and inductive-charging receiver 1642 receives the inductive charging signal from inductive-charging transmitter 1602, similarly as described regarding interaction 1104 of FIG. 11. In at least one example embodiment, the transmission is performed in response to receipt of a charge request signal.

At interaction 1616, inductive-charging transmitter 1602 determines whether a second transmission duration has elapsed, similarly as described regarding interaction 1106 of FIG. 11. If inductive-charging transmitter 1602 determines that a second transmission duration has failed to elapse, flow proceeds back to interaction 1616. If inductive-charging transmitter 1602 determines that a second transmission duration has elapsed, flow proceeds to interaction 1618. The second transmission duration may be similar as described regarding FIGS. 9A-9B.

At interaction 1618, inductive-charging transmitter 1602 terminates transmission of the inductive charging signal, similarly as described regarding interaction 1108 of FIG. 11. In at least one example embodiment, the termination is performed after elapse of the second transmission duration.

At interaction 1620, inductive-charging transmitter 1602 determines whether a duration between termination of the inductive charge signal and receipt of a charge request signal exceeded a threshold duration. If inductive-charging transmitter 1602 determines that the duration between termination of the inductive charge signal and receipt of a charge request signal failed to exceed a threshold duration, flow proceeds to interaction 1622. If inductive-charging transmitter 1602 determines that a duration between termination of the inductive charge signal and receipt of a charge request signal exceeded a threshold duration, flow proceeds back to interaction 1614. The duration and the threshold duration may be similar as described regarding FIGS. 9A-9B.

At interaction 1622, inductive-charging transmitter 1602 transmits the inductive charging signal to inductive-charging receiver 1642, and inductive-charging receiver 1642 receives the inductive charging signal from inductive-charging transmitter 1602, similarly as described regarding interaction 1104 of FIG. 11. In at least one example embodiment, the transmission is performed in response to receipt of a charge request signal.

At interaction 1624, inductive-charging transmitter 1602 determines whether the first transmission duration has elapsed, similarly as described regarding interaction 1106 of FIG. 11. If inductive-charging transmitter 1602 determines that the first transmission duration has failed to elapse, flow proceeds back to interaction 1624. If inductive-charging transmitter 1602 determines that the first transmission duration has elapsed, flow proceeds to interaction 1626.

At interaction 1628, inductive-charging transmitter 1602 increments an iteration count, similarly as described regarding interaction 1610 if FIG. 16A. At interaction 1628, inductive-charging transmitter 1602 terminates transmission of the inductive charging signal, similarly as described regarding interaction 1108 of FIG. 11. In at least one example embodiment, the termination is performed after elapse of the first transmission duration.

At interaction 1630, inductive-charging transmitter 1602 determines whether a duration between termination of the inductive charge signal and receipt of a charge request signal exceeded a threshold duration. If inductive-charging transmitter 1602 determines that the duration between termination of the inductive charge signal and receipt of a charge request signal failed to exceed a threshold duration, flow proceeds back to interaction 1622. If inductive-charging transmitter 1602 determines that a duration between termination of the inductive charge signal and receipt of a charge request signal exceeded a threshold duration, flow proceeds to interaction 1632. The duration and the threshold duration may be similar as described regarding FIGS. 9A-9B.

At interaction 1632, inductive-charging transmitter 1602 transmits the inductive charging signal to inductive-charging receiver 1642, and inductive-charging receiver 1642 receives the inductive charging signal from inductive-charging transmitter 1602, similarly as described regarding interaction 1104 of FIG. 11. In at least one example embodiment, the transmission is performed in response to receipt of a charge request signal.

At interaction 1634, inductive-charging transmitter 1602 determines whether a third transmission duration has elapsed, similarly as described regarding interaction 1106 of FIG. 11. If inductive-charging transmitter 1602 determines that a third transmission duration has failed to elapse, flow proceeds back to interaction 1634. If inductive-charging transmitter 1602 determines that a second transmission duration has elapsed, flow proceeds to interaction 1636. The third transmission duration may be similar as described regarding FIGS. 9A-9B. In at least one example embodiment, the third transmission duration is the second transmission duration increased by the different iteration number multiplied by the first transmission duration. In at least one example embodiment, the third transmission duration is an overcharge guard duration less than the second transmission duration increased by the different iteration number multiplied by the first transmission duration.

At interaction 1634, inductive-charging transmitter 1602 terminates transmission of the inductive charging signal, similarly as described regarding interaction 1108 of FIG. 11. In at least one example embodiment, the termination is performed after elapse of the third transmission duration.

At interaction 1644, inductive-charging receiver 1642 charges a battery, similarly as described regarding interaction 1144 of FIG. 11. In at least one example embodiment, the battery is charged by way of the inductive-charging signal.

At interaction 1646, inductive-charging receiver 1642 determines whether receipt of the inductive charging signal has terminated, similarly as described regarding interaction 1146 of FIG. 11. If inductive-charging receiver 1642 determines that receipt of the inductive charging signal has failed to terminate, flow proceeds back to interaction 1646. If inductive-charging receiver 1642 determines that receipt of the inductive charging signal has terminated, flow proceeds to interaction 1648.

At interaction 1648, inductive-charging receiver 1642 determines a battery charge level of the battery, similarly as described regarding interaction 1148 of FIG. 11. In at least one example embodiment, the determination is performed in response to the termination of the receipt of the inductive-charging signal.

At interaction 1650, inductive-charging receiver 1642 determines whether the battery is below a battery charge termination threshold, similarly as described regarding interaction 1150 of FIG. 11. If inductive-charging receiver 1642 determines that the battery fails to be below a battery charge termination threshold, flow proceeds back to interaction 1648. If inductive-charging receiver 1642 determines that the battery is below a battery charge termination threshold, flow proceeds to interaction 1652.

At interaction 1652, inductive-charging receiver 1642 transmits a charge request signal to inductive-charging transmitter 1602, and inductive-charging transmitter 1602 receives the charge request signal from inductive-charging receiver 1642, similarly as described regarding interaction 1152 of FIG. 11. In at least one example embodiment, the transmission is performed in response to a determination that a battery charge level is below a battery charge termination threshold. In at least one example embodiment, the charge request signal is received subsequent to termination of the transmission of the inductive-charging signal.

At interaction 1654, inductive-charging receiver 1642 charges a battery, similarly as described regarding interaction 1144 of FIG. 11. In at least one example embodiment, the battery is charged by way of the inductive-charging signal.

At interaction 1656, inductive-charging receiver 1642 determines whether receipt of the inductive charging signal has terminated, similarly as described regarding interaction 1146 of FIG. 11. If inductive-charging receiver 1642 determines that receipt of the inductive charging signal has failed to terminate, flow proceeds back to interaction 1656. If inductive-charging receiver 1642 determines that receipt of the inductive charging signal has terminated, flow proceeds to interaction 1658.

At interaction 1658, inductive-charging receiver 1642 determines a battery charge level of the battery, similarly as described regarding interaction 1148 of FIG. 11. In at least one example embodiment, the determination is performed in response to the termination of the receipt of the inductive-charging signal.

At interaction 1660, inductive-charging receiver 1642 determines whether the battery is below a battery charge termination threshold, similarly as described regarding interaction 1150 of FIG. 11. If inductive-charging receiver 1642 determines that the battery fails to be below a battery charge termination threshold, flow proceeds back to interaction 1658. If inductive-charging receiver 1642 determines that the battery is below a battery charge termination threshold, flow proceeds to interaction 1662.

At interaction 1662, inductive-charging receiver 1642 transmits a charge request signal to inductive-charging transmitter 1602, and inductive-charging transmitter 1602 receives the charge request signal from inductive-charging receiver 1642, similarly as described regarding interaction 1152 of FIG. 11. In at least one example embodiment, the transmission is performed in response to a determination that a battery charge level is below a battery charge termination threshold. In at least one example embodiment, the charge request signal is received subsequent to termination of the transmission of the inductive-charging signal.

At interaction 1664, inductive-charging receiver 1642 charges a battery, similarly as described regarding interaction 1144 of FIG. 11. In at least one example embodiment, the battery is charged by way of the inductive-charging signal.

At interaction 1666, inductive-charging receiver 1642 determines whether receipt of the inductive charging signal has terminated, similarly as described regarding interaction 1146 of FIG. 11. If inductive-charging receiver 1642 determines that receipt of the inductive charging signal has failed to terminate, flow proceeds back to interaction 1666. If inductive-charging receiver 1642 determines that receipt of the inductive charging signal has terminated, flow proceeds to interaction 1668.

At interaction 1668, inductive-charging receiver 1642 determines a battery charge level of the battery, similarly as described regarding interaction 1148 of FIG. 11. In at least one example embodiment, the determination is performed in response to the termination of the receipt of the inductive-charging signal.

At interaction 1670, inductive-charging receiver 1642 determines whether the battery is below a battery charge termination threshold, similarly as described regarding interaction 1150 of FIG. 11. If inductive-charging receiver 1642 determines that the battery fails to be below a battery charge termination threshold, flow proceeds back to interaction 1668. If inductive-charging receiver 1642 determines that the battery is below a battery charge termination threshold, flow proceeds to interaction 1672.

At interaction 1672, inductive-charging receiver 1642 transmits a charge request signal to inductive-charging transmitter 1602, and inductive-charging transmitter 1602 receives the charge request signal from inductive-charging receiver 1642, similarly as described regarding interaction 1152 of FIG. 11. In at least one example embodiment, the transmission is performed in response to a determination that a battery charge level is below a battery charge termination threshold. In at least one example embodiment, the charge request signal is received subsequent to termination of the transmission of the inductive-charging signal.

FIG. 17 is an interaction diagram illustrating activities associated with operation of an inductive-charging system according to at least one example embodiment. In at least one example embodiment, there is a set of operations that corresponds with, at least some of, the activities of FIG. 17. For example, there may be a set of operations associated with activities of one or more apparatuses of FIG. 17. An apparatus, for example electronic apparatus 10 of FIG. 1, or a portion thereof, apparatus 201 of FIG. 2, or a portion thereof, or apparatus 211 of FIG. 2, or a portion thereof, apparatus 302 of FIG. 3, or a portion thereof, or apparatus 342 of FIG. 3 or a portion thereof, apparatus 502 of FIG. 5, or a portion thereof, or apparatus 542 of FIG. 5 or a portion thereof, apparatus 802 of FIG. 8A, or a portion thereof, or apparatus 842 of FIG. 8A or a portion thereof, apparatus 862 of FIG. 8B, or a portion thereof, or apparatus 882 of FIG. 8B or a portion thereof, and/or the like may utilize the set of operations. The apparatus may comprise means, including, for example processor 11 of FIG. 1, for performance of such operations. In an example embodiment, an apparatus, for example electronic apparatus 10 of FIG. 1, is transformed by having memory, for example memory 12 of FIG. 1, comprising computer code configured to, working with a processor, for example processor 11 of FIG. 1, cause the apparatus to perform the set of operations of FIG. 17.

As previously described, in some in some circumstances, it may be desirable for a user of an electronic apparatus to utilize a separate inductive-charging transceiver. In some circumstances it may be desirable for an inductive-charging transceiver to utilize a simplified transmission system. Such a simplified transmission system may reduce the complexity, cost, size, and/or the like of the inductive-charging transceiver. For example, an inductive-charging receiver may be combined with an inductive-charging transmitter to form an inductive-charging transceiver, similar as described regarding inductive-charging transceiver 1942 of FIGS. 19A-19B. By utilizing a simplified transmission system, the inductive-charging receiver may be able to share components with the inducting-charging transmitter, operate on less power, have a smaller footprint, and/or the like.

As previously described, an inductive-charging transmitter, inductive-charging transceiver, and/or the like may have a simplified transmission system. In circumstances such as these, it may be desirable to optimize an inductive-charging receiver for the simplified communications system. FIG. 17 illustrates activities associated with communication between inductive-charging transmitter 1702 and inductive-charging receiver 1742. Inductive-charging transmitter 1702 and inductive-charging receiver 1742 may be similar as described regarding apparatus 10 of FIG. 1, apparatus 201 of FIG. 2, apparatus 211 of FIG. 2, apparatus 302 of FIG. 3, apparatus 342 of FIG. 3, apparatus 502 of FIG. 5, apparatus 542 of FIG. 5, apparatus 802 of FIG. 8A, or apparatus 842 of FIG. 8A, apparatus 862 of FIG. 8B, apparatus 882 of FIG. 8B or a portion thereof, and/or the like.

At interaction 1704, inductive-charging transmitter 1702 enters an active phase of a periodic charging cycle. The entering, the active phase, and the periodic charge cycle may be similar as described regarding FIG. 10. In at least one example embodiment, each period of the periodic charge cycle consists of an inactive phase that has a fixed inactive phase duration, and an active phase that has a fixed active phase duration In at least one example embodiment, the periodic charge cycle has a fixed period. In at least one example embodiment the fixed period has a duration of the fixed active phase duration plus the fixed inactive phase duration.

At interaction 1706, inductive-charging transmitter 1702 transmits an inductive charging signal to inductive-charging receiver 1742, and inductive-charging receiver 1742 receives the inductive charging signal from inductive-charging transmitter 1702, similarly as described regarding interaction 1104 of FIG. 11. In at least one example embodiment, the transmission is performed in response to receipt of a charge request signal.

At interaction 1708, inductive-charging transmitter 1702 enters a passive phase of the periodic charging cycle. The entering, and the passive phase may be similar as described regarding FIG. 10.

At interaction 1710, inductive-charging transmitter 1702 terminates transmission of the inductive charging signal, similarly as described regarding interaction 1108 of FIG. 11. In at least one example embodiment, the termination is performed after entering of the passive phase of the periodic charge cycle. At interaction 1712, flow proceeds back to interaction 1704.

At interaction 1744, inductive-charging receiver 1742 transmits a charge request signal to inductive-charging transmitter 1702, and inductive-charging transmitter 1702 receives the charge request signal from inductive-charging receiver 1742, similarly as described regarding interaction 1152 of FIG. 11. In at least one example embodiment, the transmission is performed in response to a determination that a battery charge level is below a battery charge termination threshold. In at least one example embodiment, the charge request signal is received subsequent to termination of the transmission of the inductive-charging signal.

At interaction 1746, inductive-charging receiver 1742 charges a battery, similarly as described regarding interaction 1144 of FIG. 11. In at least one example embodiment, the battery is charged by way of the inductive-charging signal.

At interaction 1748, inductive-charging receiver 1742 determines whether receipt of the inductive charging signal has terminated, similarly as described regarding interaction 1146 of FIG. 11. If inductive-charging receiver 1742 determines that receipt of the inductive charging signal has failed to terminate, flow proceeds back to interaction 1748. If inductive-charging receiver 1742 determines that receipt of the inductive charging signal has terminated, flow proceeds to interaction 1750.

At interaction 1750, inductive-charging receiver 1742 determines a termination time of the inductive-charging signal. The determination and the termination time may be similar as described regarding FIG. 10.

At interaction 1752, inductive-charging receiver 1742 determines a battery charge level of the battery, similarly as described regarding interaction 1148 of FIG. 11. In at least one example embodiment, the determination is performed in response to the termination of the receipt of the inductive-charging signal.

At interaction 1754, inductive-charging receiver 1742 determines an inductive charging signal duration. The determination and the duration may be similar as described regarding FIG. 10.

At interaction 1756, inductive-charging receiver 1742 determines a charge request signal delay. The determination and the delay may be similar as described regarding FIG. 10. In at least one example embodiment, the charge signal delay is based, at least in part, on the inductive charge signal duration and an inactive phase duration of the periodic charge cycle. In at least one example embodiment, the charge signal delay is a sum of the inductive charge signal duration and the inactive phase duration of the periodic charge cycle.

At interaction 1758, flow proceeds back to interaction 1744. In at least one example embodiment, the transmission is performed in response to a determination that a battery charge level is below a battery charge termination threshold. In at least one example embodiment, the charge request signal is received subsequent to termination of the transmission of the inductive-charging signal. In at least one example embodiment, the charge request signal is transmitted at a time that is substantially equal to the charge request signal delay after the termination time. In at least one example embodiment, the charge request signal from the inductive-charging receiver is received during the active phase.

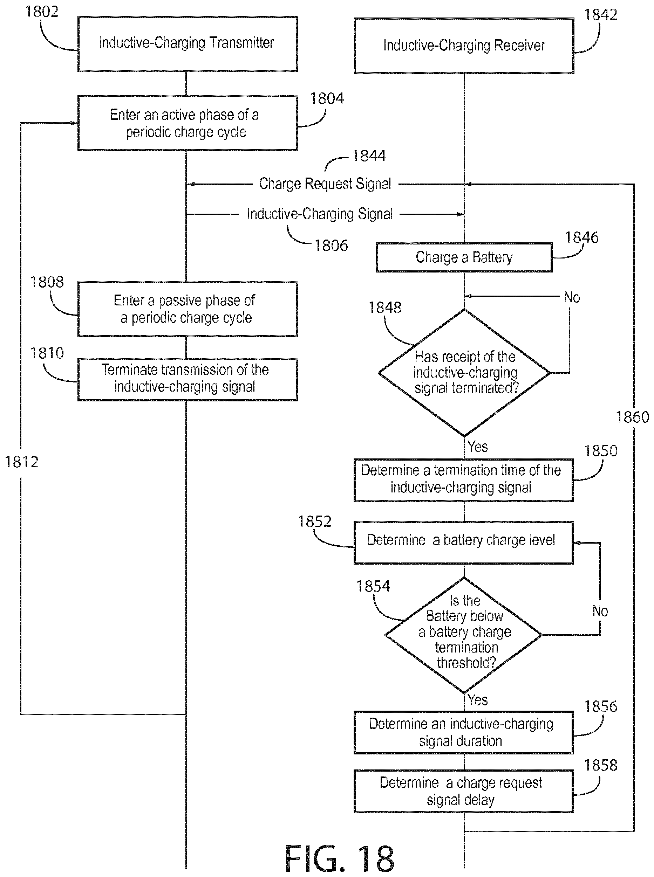

FIG. 18 is an interaction diagram illustrating activities associated with operation of an inductive-charging system according to at least one example embodiment. In at least one example embodiment, there is a set of operations that corresponds with, at least some of, the activities of FIG. 18. For example, there may be a set of operations associated with activities of one or more apparatuses of FIG. 18. An apparatus, for example electronic apparatus 10 of FIG. 1, or a portion thereof, apparatus 201 of FIG. 2, or a portion thereof, or apparatus 211 of FIG. 2, or a portion thereof, apparatus 302 of FIG. 3, or a portion thereof, or apparatus 342 of FIG. 3 or a portion thereof, apparatus 502 of FIG. 5, or a portion thereof, or apparatus 542 of FIG. 5 or a portion thereof, apparatus 802 of FIG. 8A, or a portion thereof, or apparatus 842 of FIG. 8A or a portion thereof, apparatus 862 of FIG. 8B, or a portion thereof, or apparatus 882 of FIG. 8B or a portion thereof, and/or the like may utilize the set of operations. The apparatus may comprise means, including, for example processor 11 of FIG. 1, for performance of such operations. In an example embodiment, an apparatus, for example electronic apparatus 10 of FIG. 1, is transformed by having memory, for example memory 12 of FIG. 1, comprising computer code configured to, working with a processor, for example processor 11 of FIG. 1, cause the apparatus to perform the set of operations of FIG. 18.

As previously described, an inductive-charging transmitter inductive-charging transceiver, and/or the like may have a simplified transmission system. As previously described, in circumstances such as these, it may be desirable to optimize an inductive-charging receiver for the simplified communications system. FIG. 18 illustrates activities associated with communication between inductive-charging transmitter 1802 and inductive-charging receiver 1842. Inductive-charging transmitter 1802 and inductive-charging receiver 1842 may be similar as described regarding apparatus 10 of FIG. 1, apparatus 201 of FIG. 2, apparatus 211 of FIG. 2, apparatus 302 of FIG. 3, apparatus 342 of FIG. 3, apparatus 502 of FIG. 5, apparatus 542 of FIG. 5, apparatus 802 of FIG. 8A, or apparatus 842 of FIG. 8A, apparatus 862 of FIG. 8B, apparatus 882 of FIG. 8B or a portion thereof, and/or the like.

At interaction 1804, inductive-charging transmitter 1802 enters an active phase of a periodic charging cycle, similarly as described regarding interaction 1704 of FIG. 17. At interaction 1806, inductive-charging transmitter 1802 transmits an inductive charging signal to inductive-charging receiver 1842, and inductive-charging receiver 1842 receives the inductive charging signal from inductive-charging transmitter 1802, similarly as described regarding interaction 1104 of FIG. 11. In at least one example embodiment, the transmission is performed in response to receipt of a charge request signal. At interaction 1808, inductive-charging transmitter 1802 enters a passive phase of the periodic charging cycle similarly as described regarding interaction 1708 of FIG. 17.

At interaction 1810, inductive-charging transmitter 1802 terminates transmission of the inductive charging signal, similarly as described regarding interaction 1108 of FIG. 11. In at least one example embodiment, the termination is performed after entering of the passive phase of the periodic charge cycle. At interaction 1812, flow proceeds back to interaction 1804.

At interaction 1844, inductive-charging receiver 1842 transmits a charge request signal to inductive-charging transmitter 1802, and inductive-charging transmitter 1802 receives the charge request signal from inductive-charging receiver 1842, similarly as described regarding interaction 1152 of FIG. 11. In at least one example embodiment, the transmission is performed in response to a determination that a battery charge level is below a battery charge termination threshold. In at least one example embodiment, the charge request signal is received subsequent to termination of the transmission of the inductive-charging signal.

At interaction 1846, inductive-charging receiver 1842 charges a battery, similarly as described regarding interaction 1144 of FIG. 11. In at least one example embodiment, the battery is charged by way of the inductive-charging signal.

At interaction 1848, inductive-charging receiver 1842 determines whether receipt of the inductive charging signal has terminated, similarly as described regarding interaction 1146 of FIG. 11. If inductive-charging receiver 1842 determines that receipt of the inductive charging signal has failed to terminate, flow proceeds back to interaction 1848. If inductive-charging receiver 1842 determines that receipt of the inductive charging signal has terminated, flow proceeds to interaction 1850.

At interaction 1850, inductive-charging receiver 1842 determines a termination time of the inductive-charging signal. The determination and the termination time may be similar as described regarding FIG. 10.

At interaction 1852, inductive-charging receiver 1842 determines a battery charge level of the battery, similarly as described regarding interaction 1148 of FIG. 11. In at least one example embodiment, the determination is performed in response to the termination of the receipt of the inductive-charging signal.

At interaction 1854, inductive-charging receiver 1842 determines whether the battery is below a battery charge termination threshold, similarly as described regarding interaction 1150 of FIG. 11. If inductive-charging receiver 1842 determines that the battery fails to be below a battery charge termination threshold, flow proceeds back to interaction 1852. If inductive-charging receiver 1842 determines that the battery is below a battery charge termination threshold, flow proceeds to interaction 1856.

At interaction 1856, inductive-charging receiver 1842 determines an inductive charging signal duration. The determination and the duration may be similar as described regarding FIG. 10.

At interaction 1858, inductive-charging receiver 1842 determines a charge request signal delay. The determination and the delay may be similar as described regarding FIG. 10.

At interaction 1860, flow proceeds back to interaction 1844. In at least one example embodiment, the transmission is performed in response to a determination that a battery charge level is below a battery charge termination threshold. In at least one example embodiment, the charge request signal is received subsequent to termination of the transmission of the inductive-charging signal. In at least one example embodiment, the charge request signal is transmitted at a time that is substantially equal to the charge request signal delay after the termination time.

FIGS. 19A-19B are an interaction diagram illustrating activities associated with operation of an inductive-charging system according to at least one example embodiment. In at least one example embodiment, there is a set of operations that corresponds with, at least some of, the activities of FIGS. 19A-19B. For example, there may be a set of operations associated with activities of one or more apparatuses of FIGS. 19A-19B. An apparatus, for example electronic apparatus 10 of FIG. 1, or a portion thereof, apparatus 201 of FIG. 2, or a portion thereof, or apparatus 211 of FIG. 2, or a portion thereof, apparatus 302 of FIG. 3, or a portion thereof, or apparatus 342 of FIG. 3 or a portion thereof, apparatus 502 of FIG. 5, or a portion thereof, or apparatus 542 of FIG. 5 or a portion thereof, apparatus 802 of FIG. 8A, or a portion thereof, or apparatus 842 of FIG. 8A or a portion thereof, apparatus 862 of FIG. 8B, or a portion thereof, or apparatus 882 of FIG. 8B or a portion thereof, and/or the like may utilize the set of operations. The apparatus may comprise means, including, for example processor 11 of FIG. 1, for performance of such operations. In an example embodiment, an apparatus, for example electronic apparatus 10 of FIG. 1, is transformed by having memory, for example memory 12 of FIG. 1, comprising computer code configured to, working with a processor, for example processor 11 of FIG. 1, cause the apparatus to perform the set of operations of FIGS. 19A-19B.

In some circumstances, it may be desirable for an inductive-charging system to comprise more than two inductive-charging apparatuses. For example, it may be convenient for an inductive-charging system to comprise an inductive-charging transceiver that may receive and store power from an inductive-charging transmitter, and that may also transmit power to an inductive-charging receiver. In this manner, the inductive-charging transceiver may serve as a portable power source. As previously described, in some circumstances, it may be desirable for an inductive-charging transceiver to have a simplified communications system, a simplified transmission system, and/or the like. For example, such simplified systems may reduce the size, increase the efficiency, lower the component count, and/or the like of the inductive-charging transceiver.

FIGS. 19A-19B illustrates activities associated with communication between inductive-charging transmitter 1902, inductive-charging transceiver 1942, and inductive-charging receiver 1982. Inductive-charging transmitter 1902, inductive-charging transceiver 1942, and inductive-charging receiver 1982 may be similar as described regarding apparatus 10 of FIG. 1, apparatus 201 of FIG. 2, apparatus 211 of FIG. 2, apparatus 302 of FIG. 3, apparatus 342 of FIG. 3, apparatus 502 of FIG. 5, apparatus 542 of FIG. 5, apparatus 802 of FIG. 8A, or apparatus 842 of FIG. 8A, apparatus 862 of FIG. 8B, apparatus 882 of FIG. 8B or a portion thereof, and/or the like.

At interaction 1904, inductive-charging transmitter 1902 transmits an inductive charging signal to inductive-charging transceiver 1942, and inductive-charging transceiver 1942 receives the inductive charging signal from inductive-charging transmitter 1902, similarly as described regarding interaction 1104 of FIG. 11. At interaction 1906, inductive-charging transmitter 1902 determines whether a first transmission duration has elapsed, similarly as described regarding interaction 1106 of FIG. 11. If inductive-charging transmitter 1902 determines that the first transmission duration has failed to elapse, flow proceeds back to interaction 1906. If inductive-charging transmitter 1902 determines that the first transmission duration has elapsed, flow proceeds to interaction 1908. The first transmission duration may be similar as described regarding FIG. 7, and FIGS. 9A-9B.

At interaction 1908, inductive-charging transmitter 1902 terminates transmission of the inductive charging signal, similarly as described regarding interaction 1108 of FIG. 11. At interaction 1910, inductive-charging transmitter 1902 increments an iteration count. The incrementing and the iteration count may be similar as described regarding FIGS. 9A-9B.

At interaction 1912, inductive-charging transmitter 1902 determines whether a duration between termination of the inductive charge signal and receipt of a charge request signal exceeded a threshold duration. If inductive-charging transmitter 1902 determines that the duration between termination of the inductive charge signal and receipt of a charge request signal failed to exceed a threshold duration, flow proceeds back to interaction 1904. If inductive-charging transmitter 1902 determines that a duration between termination of the inductive charge signal and receipt of a charge request signal exceeded a threshold duration, flow proceeds to interaction 1916. The duration and the threshold duration may be similar as described regarding FIGS. 9A-9B.

At interaction 1914, inductive-charging transmitter 1902 transmits an inductive charging signal to inductive-charging transceiver 1942, and inductive-charging transceiver 1942 receives the inductive charging signal from inductive-charging transmitter 1902, similarly as described regarding interaction 1104 of FIG. 11. In at least one example embodiment, the transmission is performed in response to receipt of a charge request signal.

At interaction 1916, inductive-charging transmitter 1902 determines whether a second transmission duration has elapsed, similarly as described regarding interaction 1112 of FIG. 11. If inductive-charging transmitter 1902 determines that a second transmission duration has failed to elapse, flow proceeds back to interaction 1916. If inductive-charging transmitter 1902 determines that a second transmission duration has elapsed, flow proceeds to interaction 1918. The second transmission duration may be similar as described regarding FIGS. 9A-9B.

At interaction 1918, inductive-charging transmitter 1902 terminates transmission of the inductive charging signal, similarly as described regarding interaction 1108 of FIG. 11. In at least one example embodiment, the termination is performed after elapse of the second transmission duration.

At interaction 1944, inductive-charging transceiver 1942 charges a battery, similarly as described regarding interaction 1144 of FIG. 11. In at least one example embodiment, the battery is charged by way of the inductive-charging signal.

At interaction 1946, inductive-charging transceiver 1942 determines whether receipt of the inductive charging signal has terminated, similarly as described regarding interaction 1146 of FIG. 11. If inductive-charging transceiver 1942 determines that receipt of the inductive charging signal has failed to terminate, flow proceeds back to interaction 1946. If inductive-charging transceiver 1942 determines that receipt of the inductive charging signal has terminated, flow proceeds to interaction 1948.

At interaction 1948, inductive-charging transceiver 1942 determines a battery charge level of the battery, similarly as described regarding interaction 1148 of FIG. 11. In at least one example embodiment, the determination is performed in response to the termination of the receipt of the inductive-charging signal.

At interaction 1950, inductive-charging transceiver 1942 determines whether the battery is below a battery charge termination threshold, similarly as described regarding interaction 1150 of FIG. 11. If inductive-charging transceiver 1942 determines that the battery fails to be below a battery charge termination threshold, flow proceeds back to interaction 1948. If inductive-charging transceiver 1942 determines that the battery is below a battery charge termination threshold, flow proceeds to interaction 1952.

At interaction 1952, inductive-charging transceiver 1942 transmits a charge request signal to inductive-charging transmitter 1902, and inductive-charging transmitter 1902 receives the charge request signal from inductive-charging transceiver 1942, similarly as described regarding interaction 1152 of FIG. 11. In at least one example embodiment, the transmission is performed in response to a determination that a battery charge level is below a battery charge termination threshold. In at least one example embodiment, the charge request signal is received subsequent to termination of the transmission of the inductive-charging signal.

At interaction 1951, inductive-charging transceiver 1942 enters an active phase of a periodic charging cycle. The entering, the active phase, and the periodic charging cycle may be similar as described regarding FIG. 10.

At interaction 1954, inductive-charging transceiver 1942 transmits an inductive charging signal to inductive-charging receiver 1982, and inductive-charging receiver 1982 receives the inductive charging signal from inductive-charging transceiver 1942, similarly as described regarding interaction 1104 of FIG. 11. In at least one example embodiment, the transmission is performed in response to receipt of a charge request signal.

At interaction 1956, inductive-charging transceiver 1942 enters a passive phase of the periodic charging cycle. The entering, and the passive phase may be similar as described regarding FIG. 10.

At interaction 1958, inductive-charging transceiver 1942 terminates transmission of the inductive charging signal, similarly as described regarding interaction 1108 of FIG. 11. In at least one example embodiment, the termination is performed after entering of the passive phase of the periodic charge cycle. At interaction 1960, flow proceeds back to interaction 1951.

At interaction 1984, inductive-charging receiver 1982 transmits a charge request signal to inductive-charging transceiver 1942, and inductive-charging transmitter 1942 receives the charge request signal from inductive-charging receiver 1982, similarly as described regarding interaction 1152 of FIG. 11. In at least one example embodiment, the transmission is performed in response to a determination that a battery charge level is below a battery charge termination threshold. In at least one example embodiment, the charge request signal is received subsequent to termination of the transmission of the inductive-charging signal.

At interaction 1986, inductive-charging transceiver 1942 charges a battery, similarly as described regarding interaction 1144 of FIG. 11. In at least one example embodiment, the battery is charged by way of the inductive-charging signal.

At interaction 1988, inductive-charging receiver 1982 determines whether receipt of the inductive charging signal has terminated, similarly as described regarding interaction 1146 of FIG. 11. If inductive-charging receiver 1982 determines that receipt of the inductive charging signal has failed to terminate, flow proceeds back to interaction 1988. If inductive-charging receiver 1982 determines that receipt of the inductive charging signal has terminated, flow proceeds to interaction 1990.

At interaction 1990, inductive-charging receiver 1982 determines a termination time of the inductive-charging signal. The determination and the termination time may be similar as described regarding FIG. 10.

At interaction 1992, inductive-charging receiver 1982 determines a battery charge level of the battery, similarly as described regarding interaction 1148 of FIG. 11. In at least one example embodiment, the determination is performed in response to the termination of the receipt of the inductive-charging signal.

At interaction 1994, inductive-charging receiver 1982 determines an inductive charging signal duration. The determination and the duration may be similar as described regarding FIG. 10.

At interaction 1996, inductive-charging receiver 1982 determines a charge request signal delay. The determination and the delay may be similar as described regarding FIG. 10.

At interaction 1998, flow proceeds back to interaction 1984. In at least one example embodiment, the transmission is performed in response to a determination that a battery charge level is below a battery charge termination threshold. In at least one example embodiment, the charge request signal is received subsequent to termination of the transmission of the inductive-charging signal. In at least one example embodiment, the charge request signal is transmitted at a time that is substantially equal to the charge request signal delay after the termination time.

One or more example embodiments may be implemented in software, hardware, application logic or a combination of software, hardware, and application logic. The software, application logic, and/or hardware may reside on the apparatus, a separate device, or a plurality of separate devices. If desired, part of the software, application logic, and/or hardware may reside on the apparatus, part of the software, application logic and/or hardware may reside on a separate device, and part of the software, application logic, and/or hardware may reside on a plurality of separate devices. In an example embodiment, the application logic, software or an instruction set is maintained on any one of various computer-readable media.

If desired, the different functions discussed herein may be performed in a different order and/or concurrently with each other. For example, block 1750 of FIG. 17 may be performed after block 1752 of FIG. 17. Furthermore, if desired, one or more of the above-described functions may be optional or may be combined. For example, block 1750 of FIG. 17 may be optional and/or combined with block 1752 of FIG. 17.

## Claims

1. A method comprising:
transmitting, by an inductive-charging transmitter (201), an inductive-charging signal (602, 702) to an inductive-charging receiver (211), the inductive charging signal (602, 702) having a substantially fixed amplitude and having a frequency corresponding to a resonant frequency of the inductive-charging receiver (211);
terminating transmission of the inductive-charging signal after elapse of a pre-determined transmission duration (704) of the inductive-charging signal (602, 702);
subsequent to the termination of the transmission of the inductive-charging signal (602, 702), receiving a charge request signal (722) from the inductive-charging receiver (211);
in response to the charge request signal (722), transmitting the inductive-charging signal (602, 702);
terminating transmission of the inductive-charging signal (602, 702) after elapse of another pre-determined transmission duration (704) of the inductive-charging signal (602, 702);
wherein the method further comprises:
entering an active phase of a periodic charge cycle, wherein the periodic charge cycle has a fixed period, and wherein the transmission of the inductive-charging signal is performed during the active phase; and
subsequent to entering of the active phase, entering a passive phase of the periodic charge cycle, wherein the termination of the transmission of the inductive-charging signal is performed in response to entering of the passive phase.

2. The method of Claim 1, wherein the substantially fixed-amplitude corresponds to a full power transmission amplitude.

3. The method of any of Claims 1-2, wherein the substantially fixed-amplitude is an amplitude that varies within a threshold tolerance.

4. The method of any of Claims 1-3, further comprising:
receiving, by the inductive charging-receiver (211), the inductive-charging signal (602, 702) from the inductive-charging transmitter (201);
charging a battery (360) by way of the inductive-charging signal (602, 702);
determining that receipt of the inductive-charging signal (602, 702) has terminated;
in response to determining the termination of the receipt of the inductive-charging signal (602, 702), determining a battery charge level (742) of the battery (360);
determining that the battery charge level (742) is below a battery charge termination threshold (744); and
in response to the determination that the battery charge level (742) is below the battery charge termination threshold (744), transmitting the charge request signal (742) to the inductive-charging transmitter.

5. The method of claim 4, further comprising:
determining a duration time of the inductive-charging signal;
determining the inductive-charging signal duration time based, at least in part, on the battery charge level (742), the inductive charge signal duration time being less than the fixed active phase duration of the periodic charge cycle; and
determining a charge request signal delay based, at least in part, on the inductive charge signal duration time, wherein the charge request signal is transmitted at a time that is substantially equal to the charge request signal delay after the inductive-charging signal duration time.

6. The method of claim 5, wherein the determination of the charge signal delay is based, at least in part, on the inductive charge signal duration time and an inactive phase duration of the periodic charge cycle.

7. An apparatus (10, 201) comprising means (11,12, 202) for performing:
transmitting, by an inductive-charging transmitter (201), an inductive-charging signal (602, 702) to an inductive-charging receiver (211), the inductive charging signal (602, 702) having a substantially fixed amplitude and having a frequency corresponding to a resonant frequency of the inductive-charging receiver (211);
terminating transmission of the inductive-charging signal after elapse of a pre-determined transmission duration (704) of the inductive-charging signal (602, 702);
subsequent to the termination of the transmission of the inductive-charging signal (602, 702), receiving a charge request signal (722) from the inductive-charging receiver (211);
in response to the charge request signal (722), transmitting the inductive-charging signal (602, 702); and
terminating transmission of the inductive-charging signal (602, 702) after elapse of another pre-determined transmission duration (704) of the inductive-charging signal (602, 702); wherein the apparatus (10, 201) further comprises means (11,12, 202) for performing:
entering an active phase of a periodic charge cycle, wherein the periodic charge cycle has a fixed period, and wherein the transmission of the inductive-charging signal is performed during the active phase; and
subsequent to entering of the active phase, entering a passive phase of the periodic charge cycle, wherein the termination of the transmission of the inductive-charging signal is performed in response to entering of the passive phase.

8. The apparatus (10, 201) of claim 7, wherein the means (11,12, 202) for performing the method comprise at least:
a signal generator (506) that generates the inductive-charging signal (602, 702);
a charging coil (508) that is configured to transmit the inductive-charging signal (602, 702) to the inductive-charging receiver (211); and
a controller (504) configured to perform the method of any of Claims 1-3.

9. An electronic device being one of: a mobile computer, a personal digital assistant, a gaming apparatus, a laptop computer, a tablet computer, a media player, a camera, a video recorder, a mobile phone, a global positioning system, GPS, apparatus, a wireless charging apparatus, an inductive-charging apparatus, an inductive-charging receiver, an inductive-charging transmitter, and/or an inductive-charging transceiver, wherein the electronic device comprises the apparatus of claim 7 or 8.

10. A system comprising:
the apparatus (10, 201) of any one or more of claims 7-8; and
a second apparatus (10, 211) comprising means for performing:
receiving, by the inductive charging-receiver (211), the inductive-charging signal (602, 702) from the inductive-charging transmitter (201);
charging a battery (360) by way of the inductive-charging signal (602, 702);
determining that receipt of the inductive-charging signal (602, 702) has terminated;
in response to the termination of the receipt of the inductive-charging signal (602, 702), determining a battery charge level (742) of the battery (360);
determining that the battery charge level (742) is below a battery charge termination threshold (744); and
in response to the determination that the battery charge level (742) is below the battery charge termination threshold (744), transmitting the charge request signal (742) to the inductive-charging transmitter.

11. The system of claim 10, wherein the second apparatus (10, 211) comprises:
a charging coil (548) that is configured to receive the inductive charging signal (602, 702) from the inductive charging transmitter (201);
a rectifier circuit (550) coupled, at least indirectly, with the charging coil (548) such that the rectifier receives, at least indirectly, the inductive charging signal (602, 702) and produces a rectified charging signal, wherein the battery is coupled, at least indirectly, with the rectifier circuit so that the battery receives, at least indirectly, the rectified charging signal such that the rectified charging signal causes the battery to charge; and
a controller (544) configured to perform the method of any of Claims 4-6.

12. A computer program comprising instructions for causing an apparatus to perform: the method of any of Claims 1-6.

## Patentansprüche

1. Verfahren, das Folgendes umfasst:
Übertragen eines Induktivladungssignals (602, 702) durch einen Induktivladungssender (201) zu einem Induktivladungsempfänger (211), wobei das Induktivladungssignal (602, 702) eine im Wesentlichen feste Amplitude sowie eine Frequenz aufweist, die einer Resonanzfrequenz des Induktivladungsempfängers (211) entspricht;
Beenden der Übertragung des Induktivladungssignals nach Vergehen einer vorbestimmten Übertragungsdauer (704) des Induktivladungssignals (602, 702);
nach der Beendigung der Übertragung des Induktivladungssignals (602, 702) Empfangen eines Ladungsanforderungssignals (722) vom Induktivladungsempfänger (211) ;
in Reaktion auf das Ladungsanforderungssignal (722) Übertragen des Induktivladungssignals (602, 702);
Beenden der Übertragung des Induktivladungssignals (602, 702) nach Vergehen einer weiteren vorbestimmten Übertragungsdauer (704) des Induktivladungssignals (602, 702);
wobei das Verfahren ferner Folgendes umfasst:
Eingeben einer aktiven Phase eines periodischen Ladezyklus, wobei der periodische Ladezyklus eine feste Periode aufweist, und wobei die Übertragung des Induktivladungssignals während der aktiven Phase durchgeführt wird; und
nach dem Eingeben der aktiven Phase Eingeben einer passiven Phase des periodischen Ladezyklus, wobei die Beendigung der Übertragung des Induktivladungssignals in Reaktion auf das Eingeben der passiven Phase durchgeführt wird.

2. Verfahren nach Anspruch 1, wobei die im Wesentlichen feste Amplitude einer Amplitude bei voller Übertragungsleistung entspricht.

3. Verfahren nach einem der Ansprüche 1 bis 2, wobei die im Wesentlichen feste Amplitude eine Amplitude ist, die innerhalb einer Schwellwerttoleranz variiert.

4. Verfahren nach einem der Ansprüche 1 bis 3, das ferner Folgendes umfasst:
Empfangen des Induktivladungssignals (602, 702) durch den Induktivladungsempfänger (211) vom Induktivladungssender (201);
Laden einer Batterie (360) mittels des Induktivladungssignals (602, 702);
Bestimmen, dass der Empfang des Induktivladungssignals (602, 702) beendet ist;
in Reaktion auf das Bestimmen der Beendigung des Empfangs des Induktivladungssignals (602, 702) Bestimmen eines Batterieladungsniveaus (742) der Batterie (360);
Bestimmen, dass das Batterieladungsniveau (742) unter einem Batterieladungsbeendigungsschwellwert (744) liegt; und
in Reaktion auf die Bestimmung, dass das Batterieladungsniveau (742) unter dem Batterieladungsbeendigungsschwellwert (744) liegt, Übertragen des Ladungsanforderungssignals (722) zum Induktivladungssender.

5. Verfahren nach Anspruch 4, das ferner Folgendes umfasst:
Bestimmen einer Zeitdauer des Induktivladungssignals;
Bestimmen der Induktivladungssignalzeitdauer mindestens teilweise auf Basis des Batterieladungsniveaus (742), wobei die Induktivladungssignalzeitdauer kürzer ist als die Dauer der festen aktiven Phase des periodischen Ladezyklus; und
Bestimmen einer Ladungsanforderungssignalverzögerung mindestens teilweise auf Basis der Induktivladungssignalzeitdauer, wobei das Ladungsanforderungssignal zu einer Zeit übertragen wird, die im Wesentlichen der Ladungsanforderungssignalverzögerung nach der Induktionsladungssignalzeitdauer gleich ist.

6. Verfahren nach Anspruch 5, wobei die Bestimmung der Ladungssignalverzögerung mindestens teilweise auf der Induktivladungssignalzeitdauer und einer Dauer der inaktiven Phase des periodischen Ladezyklus basiert.

7. Einrichtung (10, 201), die Mittel (11, 12, 202) zum Durchführen von Folgendem umfasst:
Übertragen eines Induktivladungssignals (602, 702) durch einen Induktivladungssender (201) zu einem Induktivladungsempfänger (211), wobei das Induktivladungssignal (602, 702) eine im Wesentlichen feste Amplitude sowie eine Frequenz aufweist, die einer Resonanzfrequenz des Induktivladungsempfängers (211) entspricht;
Beenden der Übertragung des Induktivladungssignals nach Vergehen einer vorbestimmten Übertragungsdauer (704) des Induktivladungssignals (602, 702);
nach der Beendigung der Übertragung des Induktivladungssignals (602, 702) Empfangen eines Ladungsanforderungssignals (722) vom Induktivladungsempfänger (211) ;
in Reaktion auf das Ladungsanforderungssignal (722) Übertragen des Induktivladungssignals (602, 702); und
Beenden der Übertragung des Induktivladungssignals (602, 702) nach Vergehen einer weiteren vorbestimmten Übertragungsdauer (704) des Induktivladungssignals (602, 702);
wobei die Einrichtung (10, 201) ferner Mittel (11, 12, 202) zum Durchführen von Folgendem umfasst:
Eingeben einer aktiven Phase eines periodischen Ladezyklus, wobei der periodische Ladezyklus eine feste Periode aufweist, und wobei die Übertragung des Induktivladungssignals während der aktiven Phase durchgeführt wird; und
nach dem Eingeben der aktiven Phase Eingeben einer passiven Phase des periodischen Ladezyklus, wobei die Beendigung der Übertragung des Induktivladungssignals in Reaktion auf das Eingeben der passiven Phase durchgeführt wird.

8. Einrichtung (10, 201) nach Anspruch 7, wobei die Mittel (11, 12, 202) zum Durchführen des Verfahrens mindestens Folgendes umfassen:
einen Signalerzeuger (506), der das Induktivladungssignal (602, 702) erzeugt;
eine Ladespule (508), die dazu ausgelegt ist, das Induktivladungssignal (602, 702) zum Induktivladungsempfänger (211) zu übertragen; und
eine Steuerung (504), die dazu ausgelegt ist, das Verfahren nach einem der Ansprüche 1 bis 3 durchzuführen.

9. Elektronische Vorrichtung, die eines von Folgendem ist:
ein mobiler Computer, ein persönlicher digitaler Assistent, eine Gamingeinrichtung, ein Laptopcomputer, ein Tabletcomputer, ein Medienplayer, eine Kamera, ein Videorecorder, ein Mobiltelefon, eine Einrichtung für ein globales Positionsbestimmungssystem, GPS, eine drahtlose Ladeeinrichtung, eine Induktivladeeinrichtung, einen Induktivladungsempfänger, einen Induktivladungssender und/oder einen Induktivladungssendeempfänger, wobei die elektronische Vorrichtung die Einrichtung nach Anspruch 7 oder 8 umfasst.

10. System, das Folgendes umfasst:
die Einrichtung (10, 201) nach einem oder mehreren der Ansprüche 7 bis 8; und
eine zweite Einrichtung (10, 211), die Mittel zum Durchführen von Folgendem umfasst:
Empfangen des Induktivladungssignals (602, 702) durch den Induktivladungsempfänger (211) vom Induktivladungssender (201);
Laden einer Batterie (360) mittels des Induktivladungssignals (602, 702);
Bestimmen, dass der Empfang des Induktivladungssignals (602, 702) beendet ist;
in Reaktion auf die Beendigung des Empfangs des Induktivladungssignals (602, 702) Bestimmen eines Batterieladungsniveaus (742) der Batterie (360);
Bestimmen, dass das Batterieladungsniveau (742) unter einem Batterieladungsbeendigungsschwellwert (744) liegt; und
in Reaktion auf die Bestimmung, dass das Batterieladungsniveau (742) unter dem Batterieladungsbeendigungsschwellwert (744) liegt, Übertragen des Ladungsanforderungssignals (742) zum Induktivladungssender.

11. System nach Anspruch 10, wobei die zweite Einrichtung (10, 211) Folgendes umfasst:
eine Ladespule (548), die dazu ausgelegt ist, das Induktivladungssignal (602, 702) vom Induktivladungssender (201) zu empfangen;
eine Gleichrichterschaltung (550), die mindestens indirekt an die Ladespule (548) gekoppelt ist, derart, dass der Gleichrichter mindestens indirekt das Induktivladungssignal (602, 702) empfängt und ein gleichgerichtetes Ladungssignal produziert, wobei die Batterie mindestens indirekt an die Gleichrichterschaltung gekoppelt ist, derart, dass die Batterie mindestens indirekt das gleichgerichtete Ladungssignal empfängt, derart, dass das gleichgerichtete Ladungssignal das Laden der Batterie veranlasst; und
eine Steuerung (544), die dazu ausgelegt ist, das Verfahren nach einem der Ansprüche 4 bis 6 durchzuführen.

12. Computerprogramm, das Anweisungen zum Veranlassen einer Einrichtung, das Verfahren nach einem der Ansprüche 1 bis 6 durchzuführen, umfasst.

## Revendications

1. Procédé comprenant :
la transmission, par un transmetteur de charge inductive (201), d'un signal de charge inductive (602, 702) à un récepteur de charge inductive (211), le signal de charge inductive (602, 702) présentant une amplitude sensiblement fixe et présentant une fréquence correspondant à une fréquence de résonance du récepteur de charge inductive (211) ;
la cessation de la transmission du signal de charge inductive après écoulement d'une durée de transmission prédéterminée (704) du signal de charge inductive (602, 702) ;
à la suite de la cessation de la transmission du signal de charge inductive (602, 702), la réception d'un signal de demande de charge (722) du récepteur de charge inductive (211) ;
en réponse au signal de demande de charge (722), la transmission du signal de charge inductive (602, 702) ;
la cessation de la transmission du signal de charge inductive (602, 702) après écoulement d'une autre durée de transmission prédéterminée (704) du signal de charge inductive (602, 702) ;
dans lequel le procédé comprend en outre :
l'entrée d'une phase active d'un cycle de charge périodique, dans lequel le cycle de charge périodique présente une période fixe, et dans lequel la transmission du signal de charge inductive est mise en œuvre pendant la phase active ; et
à la suite de l'entrée de la phase active, l'entrée d'une phase passive du cycle de charge périodique, dans lequel la cessation de la transmission du signal de charge inductive est mise en œuvre en réponse à l'entrée de la phase passive.

2. Procédé selon la revendication 1, dans lequel l'amplitude sensiblement fixe correspond à une amplitude de transmission à pleine puissance.

3. Procédé selon l'une quelconque des revendications 1 à 2, dans lequel l'amplitude sensiblement fixe est une amplitude qui varie dans une tolérance de seuil.

4. Procédé selon l'une quelconque des revendications 1 à 3, comprenant en outre :
la réception, par le récepteur de charge inductive (211), du signal de charge inductive (602, 702) du transmetteur de charge inductive (201) ;
la charge d'une batterie (360) par le biais du signal de charge inductive (602, 702) ;
la détermination que la réception du signal de charge inductive (602, 702) a cessé ;
en réponse à la détermination de la cessation de la réception du signal de charge inductive (602, 702), la détermination d'un niveau de charge de batterie (742) de la batterie (360) ;
la détermination que le niveau de charge de batterie (742) est au-dessous d'un seuil de cessation de charge de batterie (744) ; et
en réponse à la détermination que le niveau de charge de batterie (742) est au-dessous du seuil de cessation de charge de batterie (744), la transmission du signal de demande de charge (722) au transmetteur de charge inductive.

5. Procédé selon la revendication 4, comprenant en outre :
la détermination d'une durée du signal de charge inductive ;
la détermination de la durée de signal de charge inductive sur la base, au moins en partie, du niveau de charge de batterie (742), la durée de signal de charge inductive étant inférieure à la durée de phase active fixe du cycle de charge périodique ; et
la détermination d'un retard de signal de demande de charge sur la base, au moins en partie, de la durée de signal de charge inductive, dans lequel le signal de demande de charge est transmis à un moment qui est sensiblement égal au retard de signal de demande de charge après la durée de signal de charge inductive.

6. Procédé selon la revendication 5, dans lequel la détermination du retard de signal de charge est basée, au moins en partie, sur la durée de signal de charge inductive et une durée de phase inactive du cycle de charge périodique.

7. Appareil (10, 201) comprenant des moyens (11, 12, 202) pour mettre en œuvre :
la transmission, par un transmetteur de charge inductive (201), d'un signal de charge inductive (602, 702) à un récepteur de charge inductive (211), le signal de charge inductive (602, 702) présentant une amplitude sensiblement fixe et présentant une fréquence correspondant à une fréquence de résonance du récepteur de charge inductive (211) ;
la cessation de la transmission du signal de charge inductive après écoulement d'une durée de transmission prédéterminée (704) du signal de charge inductive (602, 702) ;
à la suite de la cessation de la transmission du signal de charge inductive (602, 702), la réception d'un signal de demande de charge (722) du récepteur de charge inductive (211) ;
en réponse au signal de demande de charge (722), la transmission du signal de charge inductive (602, 702) ; et
la cessation de la transmission du signal de charge inductive (602, 702) après écoulement d'une autre durée de transmission prédéterminée (704) du signal de charge inductive (602, 702) ;
dans lequel l'appareil (10, 201) comprend en outre des moyens (11, 12, 202) pour mettre en œuvre :
l'entrée d'une phase active d'un cycle de charge périodique, dans lequel le cycle de charge périodique présente une période fixe, et dans lequel la transmission du signal de charge inductive est mise en œuvre pendant la phase active ; et
à la suite de l'entrée de la phase active, l'entrée d'une phase passive du cycle de charge périodique, dans lequel la cessation de la transmission du signal de charge inductive est mise en œuvre en réponse à l'entrée de la phase passive.

8. Appareil (10, 201) selon la revendication 7, dans lequel les moyens (11, 12, 202) pour mettre en œuvre le procédé comprennent au moins :
un générateur de signal (506) qui génère le signal de charge inductive (602, 702) ;
une bobine de charge (508) qui est configurée pour transmettre le signal de charge inductive (602, 702) au récepteur de charge inductive (211) ; et
un contrôleur (504) configuré pour mettre en œuvre le procédé selon l'une quelconque des revendications 1 à 3.

9. Dispositif électronique qui est un parmi : un ordinateur nomade, un assistant numérique personnel, un appareil de jeu, un ordinateur portable, une tablette PC, un lecteur de médias, une caméra, un enregistreur vidéo, un téléphone mobile, un appareil à système de positionnement mondial, GPS, un appareil de charge sans fil, un appareil à charge inductive, un récepteur de charge inductive, un transmetteur de charge inductive, et/ou un émetteur/récepteur de charge inductive, dans lequel le dispositif électronique comprend l'appareil selon la revendication 7 ou 8.

10. Système comprenant :
l'appareil (10, 201) selon l'une ou plusieurs des revendications 7 à 8 ; et
un deuxième appareil (10, 211) comprenant des moyens pour mettre en œuvre :
la réception, par le récepteur de charge inductive (211), du signal de charge inductive (602, 702) du transmetteur de charge inductive (201) ;
la charge d'une batterie (360) par le biais du signal de charge inductive (602, 702) ;
la détermination que la réception du signal de charge inductive (602, 702) a cessé ;
en réponse à la cessation de la réception du signal de charge inductive (602, 702), la détermination d'un niveau de charge de batterie (742) de la batterie (360) ;
la détermination que le niveau de charge de batterie (742) est au-dessous d'un seuil de cessation de charge de batterie (744) ; et
en réponse à la détermination que le niveau de charge de batterie (742) est au-dessous du seuil de cessation de charge de batterie (744), la transmission du signal de demande de charge (742) au transmetteur de charge inductive.

11. Système selon la revendication 10, dans lequel le deuxième appareil (10, 211) comprend :
une bobine de charge (548) qui est configurée pour recevoir le signal de charge inductive (602, 702) du transmetteur de charge inductive (201) ;
un circuit redresseur (550) couplé, au moins indirectement, à la bobine de charge (548) de telle sorte que le redresseur reçoit, au moins indirectement, le signal de charge inductive (602, 702) et produit un signal de charge redressé, dans lequel la batterie est couplée, au moins indirectement, au circuit redresseur de sorte que la batterie reçoit, au moins indirectement, le signal de charge redressé de telle sorte que le signal de charge redressé amène la batterie à se charger ; et
un contrôleur (544) configuré pour mettre en œuvre le procédé selon l'une quelconque des revendications 4 à 6.

12. Programme informatique comprenant des instructions pour amener un appareil à mettre en œuvre : le procédé selon l'une quelconque des revendications 1 à 6.
